(19) Europäisches Patentamt
European Patent Office
Office européen des brevets

(11) **EP 4 254 182 B1**

(12) **EUROPEAN PATENT SPECIFICATION**

(45) Date of publication and mention
of the grant of the patent:
**05.11.2025 Bulletin 2025/45**

(21) Application number: **23164526.8**

(22) Date of filing: **28.03.2023**

(51) International Patent Classification (IPC):
**G06F 11/07** (2006.01)       **G06F 9/455** (2018.01)

(52) Cooperative Patent Classification (CPC):
**G06F 9/45558; G06F 11/0712; G06F 11/0754;**
G06F 2009/45591; G06F 2201/81

(54) **METHOD AND APPARATUS OF DETECTING RUNNING STATE OF A VIRTUAL MACHINE BASED ON KERNEL DENSITY ESTIMATION**

VERFAHREN UND VORRICHTUNG ZUR ERKENNUNG DES LAUFENDEN STATUS EINER VIRTUELLEN MASCHINE AUF BASIS EINER KERNELDICHTESCHÄTZUNG

PROCÉDÉ ET APPAREIL DE DÉTECTION DE ÉTAT D'EXÉCUTION D'UNE MACHINE VIRTUELLE SUR LA BASE D'UNE ESTIMATION DE DENSITÉ DE NOYAU

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.03.2022 CN 202210316127**
**10.05.2022 CN 202210511420**

(43) Date of publication of application:
**04.10.2023 Bulletin 2023/40**

(73) Proprietor: **Nuctech Company Limited**
**TongFang Building**
**Shuangqinglu Road**
**Haidian District**
**Beijing 100084 (CN)**

(72) Inventors:
• **CHEN, Zhiqiang**
  **Beijing, 100084 (CN)**
• **ZHANG, Li**
  **Beijing, 100084 (CN)**
• **HAO, Bei**
  **Beijing, 100084 (CN)**
• **TANG, Hu**
  **Beijing, 100084 (CN)**
• **LI, Xi**
  **Beijing, 100084 (CN)**
• **SONG, Runkun**
  **Beijing, 100084 (CN)**
• **ZHANG, Yizhong**
  **Beijing, 100084 (CN)**
• **ZHOU, Jian**
  **Beijing, 100084 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(56) References cited:
• LV PENG ET AL: "Layer-constrained variational autoencoding kernel density estimation model for anomaly detection", KNOWLEDGE-BASED SYSTEMS, ELSEVIER, AMSTERDAM, NL, vol. 196, 10 March 2020 (2020-03-10), XP086135939, ISSN: 0950-7051, [retrieved on 20200310], DOI: 10.1016/J.KNOSYS.2020.105753
• IBIDUNMOYE OLUMUYIWA ET AL: "Blackbox Strategies for Detecting Service Performance Anomalies in Virtualized Environments", 1 May 2016 (2016-05-01), pages 1 - 22, XP093070141, Retrieved from the Internet <URL:https://www.diva-portal.org/smash/get/diva2:1060538/FULLTEXT03> [retrieved on 20230803]

**Description**

TECHNICAL FIELD

The present disclosure relates to a field of a cloud computing technology, and in particular, to a method and an apparatus of detecting a running state of a virtual machine based on a kernel density estimation, an electronic device, a computer-readable storage medium and a program product.

BACKGROUND

With a continuous expansion of a cloud computing industry application field, more and more enterprises and individual users may migrate business systems thereof to a cloud platform. An expansion of scale may bring a great challenge to a security and a stability of cloud services. As a basic component of cloud computing, a stability and a reliability of a virtual machine may directly affect a normal operation of an online business. Therefore, it is of great significance to design a method capable of quickly and accurately detecting an abnormal state of the virtual machine to timely detect a potential risk and ensure a normal and orderly operation of the online business.

A conventional virtual machine abnormal alarm is manually provided with a fixed threshold value based on experience. Once virtual machine operation data exceeds the threshold value, an alarm may be triggered, which may not have a flexibility to change with time and business. At the same time, the determination method relies too much on professionals, and requires professional operation and maintenance personnel to check each indicator of the virtual machine one by one, which may be inefficient and unreliable.

The above-mentioned information disclosed in the section is only used to understand the background of the inventive concept of the present disclosure. Therefore, the above-mentioned information may include an information that does not constitute the prior art.

LV PENG ET AL: "Layer-constrained variational autoencoding kernel density estimation model for anomaly detection", KNOWLEDGE-BASED SYSTEMS, ELSEVIER, AMSTERDAM, NL, vol. 196, 10 March 2020 (2020-03-10), ISSN: 0950-7051, DOI: 10.1 01 6/J.KNOSYS.2020.1 05753, concerns a high dimensional anomaly detection method called LAKE. The key idea of LAKE is to unify the representation learning capacity of layer-constrained variational autoencoder with the density estimation power of kernel density estimation (KDE). Then a probability density distribution of the high dimensional data can be learned, which is able to effectively separate the anomalies out.

Ibidunmoye Olumuyiwa ET AL: "Blackbox Strategies for Detecting Service Performance Anomalies in Virtualized Environments", 1 May 2016 (2016-05-01), pages 1 -22, concerns detecting performance issues in services to maintain service-level objectives and ensure a good user experience. It proposes a black-box approach for symptom detection without intrusive application instrumentation. The method involves using kernel density estimation to identify deviations from a known baseline behavior and employing statistical process control charts on prediction errors from Holt-Winter's double exponential smoothing when no baseline exists.

SUMMARY

The invention is defined by the appended claims. In view of at least one aspect of the above-mentioned technical problems, a method and an apparatus of detecting a running state of a virtual machine based on a kernel density estimation, an electronic device, a computer-readable storage medium and a program product are provided.

BRIEF DESCRIPTION OF THE DRAWINGS

In order to better understand the present disclosure, the present disclosure will be described in detail according to following accompanying drawings:

FIG. 1 schematically shows an application scenario diagram of a method of detecting a running state of a virtual machine based on a kernel density estimation according to embodiments of the present disclosure.
FIG. 2 schematically shows a flowchart of a method of detecting a running state of a virtual machine based on a kernel density estimation according to embodiments of the present disclosure.
FIG. 3 schematically shows a flowchart of a step of acquiring a data set in a method of detecting a running state of a virtual machine based on a kernel density estimation according to embodiments of the present disclosure.
FIG. 4 schematically shows a correlation between three features used in a method of detecting a running state of a virtual machine based on a kernel density estimation according to embodiments of the present disclosure.
FIG. 5A to FIG. 5C schematically show probability density distribution curves of training data sets of three features.
FIG. 6 schematically shows a flowchart of a process of determining a running state score of a virtual machine using a function distribution measurement.

FIG. 7 schematically shows a flowchart of a process of determining a running state score of a virtual machine by an abnormal value ratio measurement.

FIG. 8 shows a structural block diagram of an apparatus of detecting a running state of a virtual machine based on a kernel density estimation according to exemplary embodiments not forming part of the present invention.

FIG. 9 schematically shows a structural block diagram of an electronic device suitable for implementing the above-mentioned method according to exemplary embodiments of the present disclosure.

DETAILED DESCRIPTION OF EMBODIMENTS

Specific embodiments of the present disclosure will be described below in detail. It should be noted that embodiments described here are only for illustration and are not intended to limit the present disclosure. In the following descriptions, in order to provide a thorough understanding of the present disclosure, a large number of specific details are described. However, it is obvious to those skilled in the art that it is not necessary to use these specific details to implement the present disclosure. In other examples, in order to avoid confusion of the present disclosure, well-known structures, materials or methods are not specifically described.

In the entire specification, reference to "an embodiment", "embodiments", "an example" or "examples" means that specific features, structures or characteristics described in combination with the embodiment(s) or example(s) are included in at least one embodiment of the present disclosure. Therefore, terms "in an embodiment", "in embodiments", "an example" or " examples" described in the entire specification do not necessarily refer to the same embodiment or example. In addition, the specific features, structures or characteristics may be combined in one or more embodiments or examples in any suitable combination and/or sub-combination. In addition, those skilled in the art should understand that a term "and/or" used herein includes any and all combinations of one or more related listed items.

Terms used herein are only intended to describe specific embodiments and are not intended to limit the present disclosure. Terms "include", "comprise", "contain", etc. used herein indicate the presence of the described features, steps, operations and/or components, but do not exclude the presence or addition of one or more other features, steps, operations and/or components.

All terms (including technical and scientific terms) used herein have meanings generally understood by those of ordinary skilled in the art, unless otherwise defined. It should be noted that the terms used herein should be interpreted as having the meaning consistent with the context of the present disclosure, and should not be interpreted in an idealized or overly rigid manner.

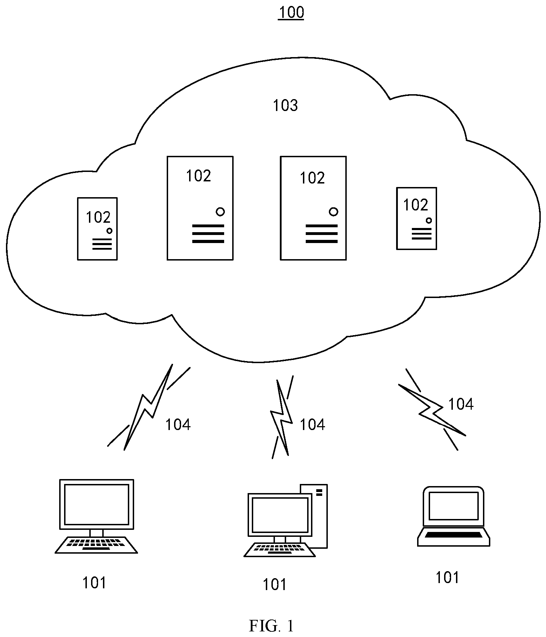

FIG. 1 schematically shows an application scenario diagram of a method of detecting a running state of a virtual machine based on a kernel density estimation according to embodiments of the present disclosure.

As shown in FIG. 1, an application scenario 100 according to embodiments of the present disclosure may include a terminal device 101, a server 102, a cloud 103 and a network 104.

Cloud computing is a kind of distributed computing, which means that a huge data computing processing program is decomposed into numerous small programs through a network "cloud", and then the small programs are processed and analyzed through a system composed of a plurality of servers to obtain a result and return the result to a user. In an early stage of the cloud computing, the cloud computing mainly performs a simple distributed computing to solve a task distribution, and consolidates computing results. At this time, the cloud computing is also called a grid computing. A processing of tens of thousands of data may be completed in a very short time (such as a few seconds) through the technology, so that a powerful network service may be achieved. With a development of technology, a cloud service at this stage is not only a kind of distributed computing, but also a result of a mixed evolution and leap of computer technologies such as distributed computing, utility computing, load balancing, parallel computing, network storage, hot backup redundancy, virtualization, etc.

The cloud computing may be classified according to a service type. At present, in the industry, the cloud computing may be classified into three categories from bottom to top according to the service type: (1) an Infrastructure as a Service (IaaS for short), which provides the user with a hardware infrastructure service, that is, computing resources, including a virtual server resource, a storage resource, a network bandwidth resource, etc.; (2) a Platform as a Service (PaaS for short), which provides the user with a platform on which an application and a service are built through the Internet, that is, an on-demand development environment is provided for developing, testing and managing a software application; and (3) a Software as a Service (SaaS for short), which provides the user with an on-demand software paid application, a cloud computing provider host and a manage software application, and allows the user to be connected to the applications and to access the applications through the Internet. As shown in FIG. 1, a plurality of servers 102 may be provided in the cloud 103, and the plurality of servers 102 may provide various services. Generally, a cloud platform management system is provided in the cloud 103, which is responsible for a rapid scheduling and a centralized management of resources provided by the plurality of servers 102.

Virtualization is one of basic technologies of the cloud computing. In a virtualization technology, a physical resource is virtualized and thus converted into a virtual resource that is easily managed. The virtualization technology includes a hardware virtualization and a software virtualization. The cloud computing may encapsulate a hardware resource and a software resource using the virtualization technology, and provide the user with a required service through the Internet. In the cloud computing, main objectives of the virtualization include a CPU resource, a memory resource, a storage resource, a network bandwidth resource, etc. The resources are usually provided to the user in a form of the virtual machine, and may be operated by providing a specific interface, which may facilitate use of the resources by the application or the user for a certain application. A server 102 may be provided with at least one virtual machine, for example, a plurality of virtual machines. On the surface, the virtual machines are independent servers. However, in fact, the virtual machines share CPU, a memory, a hardware resource, a network resource, etc. of the physical server 102. In the present disclosure, the physical machine 102 may be called "Host", and the virtual machine may also be called "Guest".

The network 104 is a medium for providing a communication link between the terminal device 101 and the cloud 103. The network 104 may include various connection types, such as wired or wireless communication links, optical fiber cables, etc.

The terminal device 101 used by a user may interact with the cloud 103 through the network 104, so that the user may use various applications, data or services in the cloud 103.

For example, the terminal devices 101 may be various electronic devices having display screens and capable of installing application software, including but not limited to smartphones, tablet computers, laptop computers, desktop computers, etc.

It should be noted that the method provided by embodiments of the present disclosure may be performed by the server 102. Accordingly, the apparatus provided by embodiments of the present disclosure may be provided in the server 102. The method provided by embodiments of the present disclosure may also be performed by a server or server cluster different from the server 102 and capable of communicating with the terminal device 101 and/or the server 102. Accordingly, the apparatus provided by embodiments of the present disclosure may also be provided in the server or server cluster different from the server 102 and capable of communicating with the terminal device 101 and/or the server 102.

It should be understood that the numbers of terminal devices, networks and servers in FIG. 1 are only schematic. According to implementation needs, any number of terminal devices, networks and servers may be provided.

At present, in some related technologies, technologies such as data mining, machine learning, etc. are applied to a virtual machine anomaly detection. The inventors have found through research that, due to use of a large number of monitoring information generated in an operation of the virtual machine as training indicators have relatively a high information dimension and frequency, it is difficult to convert the information into labelable data and thus a lot of manpower, time and professional knowledge personnel are required; an abnormal situation of the virtual machine is relatively complex, and due to a limitation of personnel, a label error or a missing label may occur; an abnormal condition of the virtual machine accounts for a small number, and positive and negative samples are seriously unbalanced. Therefore, in embodiments of the present disclosure, it is proposed to apply an unsupervised machine learning algorithm to the virtual machine anomaly detection.

Further, the unsupervised algorithm may be roughly divided into two categories: one is a clustering algorithm based on similarity measurements such as a distance and a density between samples, and the other is a nonparametric algorithm based on the kernel density estimation. The inventors have found through research that the clustering algorithm based on the similarity measurements such as the distance and the density between samples may be applied to the virtual machine anomaly detection. For example, an anomaly indicator of the virtual machine may be calculated by weighting results of algorithms such as LOF (Local Abnormal value Factor algorithm), IFOREST (Isolated Forest algorithm), DBSCAN (Density-Based Spatial Clustering of Applications with Noise algorithm), etc. In this case, the algorithm has a very high time complexity with an increase of training samples, which may not be conducive to an online processing, and a distance measurement method and an initial point of clustering are difficult to be selected, which may have a great impact on a final result.

Through a comparative analysis, another unsupervised machine learning technology - a kernel density estimation algorithm is used in embodiments of the present disclosure. The algorithm describes characteristics and distribution of data from the data itself without manually selecting the initial point and the distance measurement method, which may reduce an error of human intervention. An amount of calculation during a model test is moderate. A probability density function obtained by training may be displayed in a form of a curve distribution, which may facilitate a comparison of results and fit the description of relevant resource indicators of the virtual machine. Therefore, an anomaly detection is performed on the virtual machine by using the kernel density estimation algorithm, a warning threshold value may be obtained through a model result, and a health score of the virtual machine within a time window may be calculated in real time through a series of mechanisms, so as to replace a manual threshold value setting and a manual daily operation and maintenance patrol, and clearly display the anomaly indicator of the virtual machine, so that an intelligent operation and maintenance may be provided and manpower may be liberated.

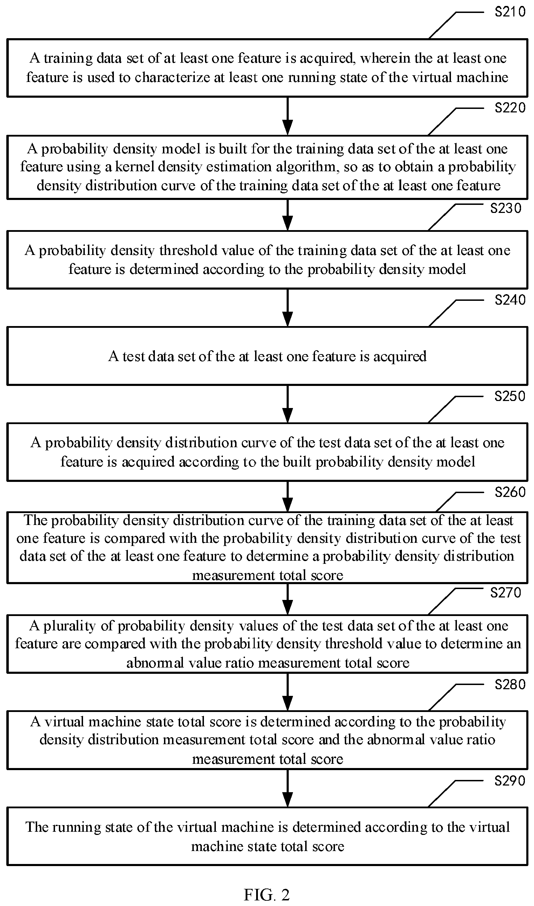

FIG. 2 schematically shows a flowchart of a method of detecting a running state of a virtual machine based on a kernel density estimation according to embodiments of the present disclosure. As shown in FIG. 2, a method 200 of detecting a running state of a virtual machine based on a kernel density estimation according to embodiments of the present disclosure may include operations S210 to S290, and the method of detecting the running state of the virtual machine based on the kernel density estimation may be performed by the server 102.

It should be noted that, according to some embodiments of the present disclosure, some steps or operations of the method 200 may be performed individually or in combination, and may be performed in parallel or in sequence, which is not limited to a specific operation sequence shown in FIG. 2. For example, at least some operations in operations S210 to S290 may be performed in parallel, in sequence or in a reverse order.

In operation S210, a training data set of at least one feature is acquired, wherein the at least one feature is used to characterize at least one running state of the virtual machine.

In operation S220, a probability density model is built for the training data set of the at least one feature by using a kernel density estimation algorithm, so as to obtain a probability density distribution curve of the training data set of the at least one feature.

In operation S230, a probability density threshold value of the training data set of the at least one feature is determined according to the probability density model.

In operation S240, a test data set of the at least one feature is acquired.

In operation S250, a probability density distribution curve of the test data set of the at least one feature is acquired according to the built probability density model.

In operation S260, the probability density distribution curve of the training data set of the at least one feature is compared with the probability density distribution curve of the test data set of the at least one feature to determine a probability density distribution measurement total score.

In operation S270, a plurality of probability density values of the test data set of the at least one feature are compared with the probability density threshold value to determine an abnormal value ratio measurement total score.

In operation S280, a virtual machine state total score is determined according to the probability density distribution measurement total score and the abnormal value ratio measurement total score.

In operation S290, the running state of the virtual machine is determined according to the virtual machine state total score.

In embodiments of the present disclosure, a virtual machine anomaly detection scoring mechanism is provided, which may make full use of characteristics of historical data and a probability density function, and design two measurement indicators to quantify a health status of the virtual machine. That is, a health condition of the virtual machine may be qualified by combining the above-mentioned two measurement indicators, so that the running state of the virtual machine may be determined quickly and intuitively.

In some exemplary embodiments of the present disclosure, the first feature is a CPU utilization, the second feature is a network receiving traffic, and the third feature is a network sending traffic. It should be noted that in following exemplary embodiments, the technical solution of the present disclosure will be described in detail with by taking the CPU utilization, the network receiving traffic and the network sending traffic as an example. However, embodiments of the present disclosure are not limited to this, that is, the at least one feature may include other features used to characterize the at least one running state of the virtual machine.

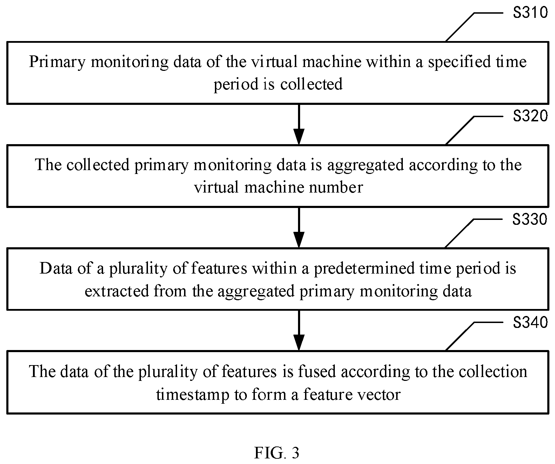

FIG. 3 schematically shows a flowchart of a step of acquiring a data set in a method of detecting a running state of a virtual machine based on a kernel density estimation according to embodiments of the present disclosure. The step of acquiring the data set may be at least one of the above-mentioned operations S210 and S240. Referring to FIG. 3, in embodiments of the present disclosure, the acquired data set may include operations S310 to S340.

In operation S310, primary monitoring data of the virtual machine within a specified time period is collected, wherein the primary monitoring data includes a virtual machine number, a collection timestamp, CPU usage time of the virtual machine, a network receiving traffic and a network sending traffic.

In embodiments of the present disclosure, the collected data set is derived from monitoring data of each virtual machine captured by Prometheus during an actual running on site. For example, the CPU utilization rate, the network receiving traffic and the network sending traffic that may reflect the running state of the virtual machine may be selected, and initial monitoring data tables for storing three resource indicators are respectively acquired from a database to complete a data collection. Specifically, Prometheus-Exporter may be deployed on the at least one virtual machine, running monitoring data of the virtual machine may be captured through the Prometheus deployed on the virtual machine, and the captured data may be stored in InfluxDB. The primary monitoring data of the virtual machine collected by the Prometheus is extracted from the InfluxDB. For example, the primary monitoring data includes: a virtual machine number, a collection timestamp, indicator values (e.g., the CPU usage time of the virtual machine, the network receiving traffic, the network sending traffic, etc.), an indicator working mode, a port, a collection service, etc. For example, a timestamp interval may be timed in seconds. The data set may be collected within the specified time period (e.g., a week). For another example, specified time periods of all virtual machines may be from 8 a.m. to 17 p.m.

It should be noted that, for the Prometheus serving as a new generation of a cloud native monitoring system, more than 650 contributors participate in a research and development of the Prometheus and more than 120 third-party integrations are provided. Exporter may expose endpoints of a monitoring data collection to Prometheus Server in a form of an HTTP service, and the Prometheus Server may obtain monitoring data required to be collected by accessing the endpoints provided by the Exporter. The InfluxDB is an open-source database for storing and analyzing time series data. Main characteristics of the InfluxDB include: a built-in HTTP interface; data being markable; SQL-like query statements; a simple installation management and a high efficiency in reading and writing data; queryable in real time, and data being easily queried immediately by indexing when being written.

In operation S320, the collected primary monitoring data is aggregated according to the virtual machine number.

In operation S330, data of a plurality of features within a predetermined time period is extracted from the aggregated primary monitoring data.

In operation S340, the data of the plurality of features are fused according to the collection timestamp to form a feature vector.

In embodiments of the present disclosure, operations S320 to S340 involve a building of a feature engineering. That is, the above-mentioned collected primary monitoring data may not be directly used to build a model, and secondary performance indicators required for modeling need to be further extracted from the primary monitoring data as model input features, including the CPU utilization, the network receiving traffic, and the network sending traffic as modeling indicators. The secondary performance indicators may be further standardized to complete the building of the feature engineering.

Specifically, the collected primary monitoring data is aggregated according to the virtual machine number. For example, the primary monitoring data may include data of the plurality of virtual machines. In the operation, the primary monitoring data is aggregated according to the virtual machine number in the data, so that the primary monitoring data of a same virtual machine may be aggregated together. Then, three secondary performance indicators may be extracted from the aggregated initial monitoring data for each virtual machine within the predetermined time period (e.g., every 20 seconds) according to an equation for computing the CPU utilization and a network traffic in PromQL. Then, a feature fusion may be performed on the extracted three secondary performance indicators (i.e., the CPU utilization, the network receiving traffic, and the network sending traffic) according to the time stamp to form the feature vector. For example, a feature vector may include three elements, that is, the CPU utilization, the network receiving traffic, and the network sending traffic. Optionally, data cleaning may also be performed to remove an influence of null and extreme values on the modeling and complete the building of the feature engineering.

It should be noted that the PromQL (Prometheus Query Language) is a built-in data query language of the Prometheus, which provides a support for a rich query, an aggregation and a logical operation capability of the time series data. The PromQL is widely used in daily applications of the Prometheus, including data query, visualization and alarm processing. After the Prometheus collects corresponding monitoring indicator sample data through the Exporter, monitoring sample data may be queried through the PromQL.

After completing the building of the feature engineering, the feature vector may be used for the modeling. In embodiments of the present disclosure, three models are built from three dimensions (that is, the first feature, the second feature, and the third feature), and a final abnormal conclusion is an overall conclusion obtained by summarizing results of the three models. In order to further rationalize a weight distribution of each dimension when the overall conclusion is obtained, a correlation between the dimensions of the built feature engineering may be analyzed. That is, a correlation analysis is performed on the first training data set of the first feature, the second training data set of the second feature and the third training data set of the third feature.

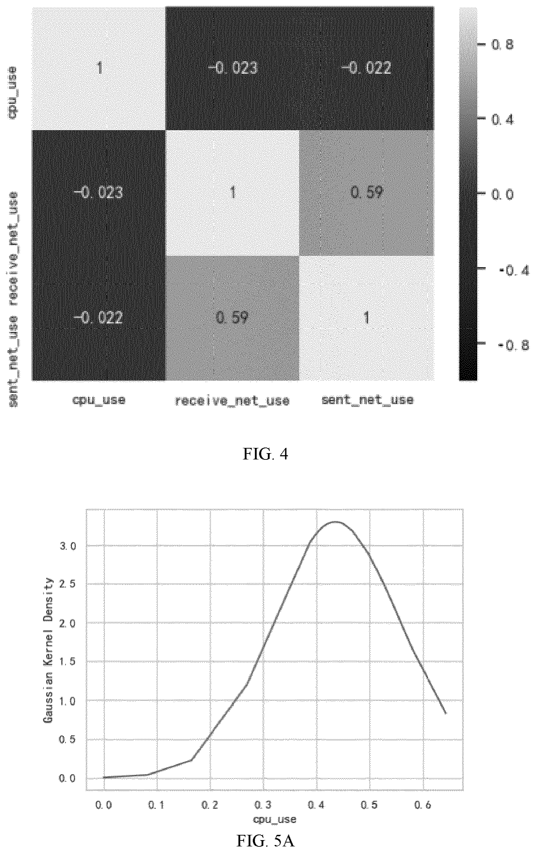

FIG. 4 schematically shows a correlation between three features used in a method of detecting a running state of a virtual machine based on a kernel density estimation according to embodiments of the present disclosure. As shown in FIG. 4, three indicators are provided in abscissa and ordinate respectively, where cpu_use represents the CPU utilization, receive_net_use represents the network receiving traffic, and sent_net_use represents the network sending traffic. Each block represents a pairwise correlation between abscissa indicators and ordinate indicators. Color is a measurement of a correlation size. A correlation between the color and a value is shown in a legend on the right. The lighter the color, the higher the correlation, and the darker the color, the lower the correlation. The value in the block represents the pairwise correlation between the abscissa indicators and the ordinate indicators. For example, a value "-0.023" in a block in the first row and the second column means that the CPU utilization and the network receiving traffic have a low correlation and have a negative correlation therebetween. A value "0.59" in a block in the second row and the third column means that the network receiving traffic and the network sending traffic have a high correlation and have a positive correlation therebetween. It can be seen from FIG. 4 that the network receiving traffic and the network sending traffic have a high correlation, and the CPU utilization and other two indicators have a low correlation.

Referring to the above-mentioned operations S220 and S250, the probability density model is built using the kernel density estimation algorithm, so as to obtain the probability density distribution curve of the training data set and the probability density distribution curve of the test data set. The curve serves as one of scoring indicators for a subsequent measurement of the test data set. Specifically, in embodiments of the present disclosure, in a process of modeling using the kernel density estimation algorithm, probability density models are built for three dimensional features respectively to obtain the probability density distribution curve of each dimension in the training data set and the test data set. The curve serves as one of scoring indicators for the subsequent measurement of the test data set, and then a reasonable probability density threshold value for each model is calculated as another indicator for the subsequent measurement of the test data set.

In embodiments of the present disclosure, a built single-dimension model may model more accurately for each dimension indicator itself to obtain an accurate detection result. A final detection score of the virtual machine is derived from an integration of all single-dimension results, so that an accuracy of the final detection score may be further improved. At the same time, the single-dimension model is more convenient for operation and maintenance personnel to know exactly which indicator causes an abnormality of the virtual machine, and a result obtained is clearer and more interpretable.

For example, in the above-mentioned operation S210, the acquiring a training data set of at least one feature includes: simultaneously acquiring a first training data set of the first feature (e.g., the CPU utilization), a second training data set of the second feature (e.g., the network receiving traffic), and a third training data set of the third feature (e.g., the network sending traffic).

In the above-mentioned operation S220, the building a probability density model for the training data set of the at least one feature by using a kernel density estimation algorithm so as to obtain a probability density distribution curve of the training data set of the at least one feature includes: building probability density models respectively for the first training data set of the first feature, the second training data set of the second feature and the third training data set of the third feature by using the kernel density estimation algorithm, so as to obtain a first probability density distribution curve of the first training data set, a second probability density distribution curve of the second training data set and a third probability density distribution curve of the third training data set.

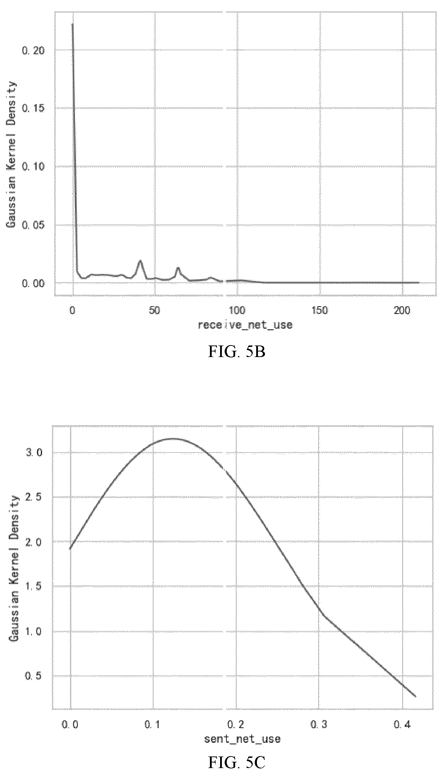

FIG. 5A to FIG. 5C schematically show probability density distribution curves of training data sets of three features. That is, FIG. 5A shows the first probability density distribution curve of the first training data set. In FIG. 5A, the abscissa is a value of the CPU utilization in the first training data set, and the ordinate is a Gaussian kernel density value. FIG. 5B shows the second probability density distribution curve of the second training data set. In FIG. 5B, the abscissa is a value (in MB) of the network receiving traffic in the second training data set, and the ordinate is a Gaussian kernel density value. FIG. 5C shows the third probability density distribution curve of the third training data set. In FIG. 5C, the abscissa is a value (in MB) of the network sending traffic in the third training data set, and the ordinate is a Gaussian kernel density value.

It should be noted that the kernel density estimation algorithm is a nonparametric estimation algorithm, which may obtain a better model than a parameter estimation by fitting a distribution from characteristics and properties of the data itself without adding prior knowledge. An essence of the kernel density estimation is to generate a density function from discrete data. Taking a given sample $x^t$ as a center point, and taking a distance between all points in a window range and the center point as a weight, and a final density function value is a weighted sum by estimated y values of each x in the window. Equation (1) is expressed as:

$$\hat{f}_h(x) = \frac{1}{nh}\sum_{i=1}^{n} K_0\left(\frac{x-x_i}{h}\right) \quad (1).$$

where K is a kernel function, and the integral is 1 and non-negative. For example, a smooth curve may be obtained using a Gaussian kernel function; h is a bandwidth, which is a size of a selection window. Too small window may cause an overfitting, and too large window may cause the curve to be too smooth to show a fluctuation. Therefore, a grid parameter optimization is used for each dimension to obtain an optimal bandwidth for each dimension.

In the above-mentioned operation S240, the acquiring a test data set of the at least one feature includes: simultaneously acquiring a first test data set of the first feature, a second test data set of the second feature and a third test data set of the third feature.

In the above-mentioned operation S250, the acquiring a probability density distribution curve of the test data set of the at least one feature according to the built probability density model includes: respectively acquiring a first probability density distribution curve of the first test data set, a second probability density distribution curve of the second test data set and a third probability density distribution curve of the third test data set according to the built probability density model.

In the above-mentioned operation S230, the determining a probability density threshold value of the training data set of the at least one feature according to the probability density model includes: determining a first probability density threshold value of the first training data set, a second probability density threshold value of the second training data set and a third probability density threshold value of the third training data set according to the probability density distribution curve. In other words, a reasonable probability density threshold value is calculated for each feature as another indicator for the subsequent measurement of the test data set.

In embodiments of the present disclosure, a running state score of the virtual machine is determined from two measurement indicators. The two measurement indicators include a function distribution measurement and an abnormal value ratio measurement. The function distribution measurement means that a distribution difference between the probability density distribution curve obtained from the test data set and the probability density distribution curve obtained from the training data set is calculated to indicate a possibility of abnormality of to-be-tested data. The abnormal value ratio measurement means that a proportion of abnormal values within a threshold value range in the test data set is calculated to indicate a probability of abnormality of to-be-tested data. Data used in the distribution curve of the training data set is resource use data during most of a normal operation of the virtual machine, which provides a certain reference value. The greater a difference between a distribution of the test data set and a distribution of the training data set, the higher the probability of the abnormality and the lower the score.

Next, a process of determining the running state score of the virtual machine will be described in detail in combination with the accompanying drawings and two measurement indicators.

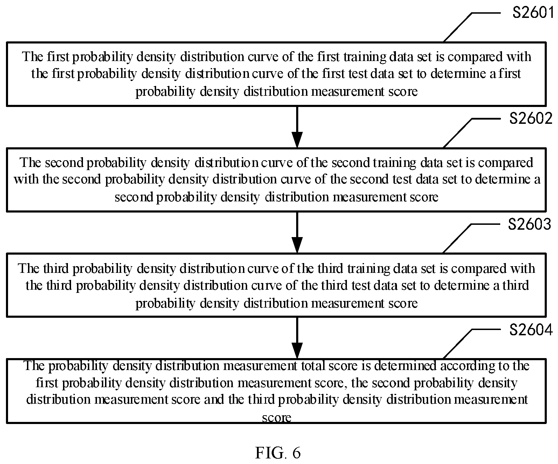

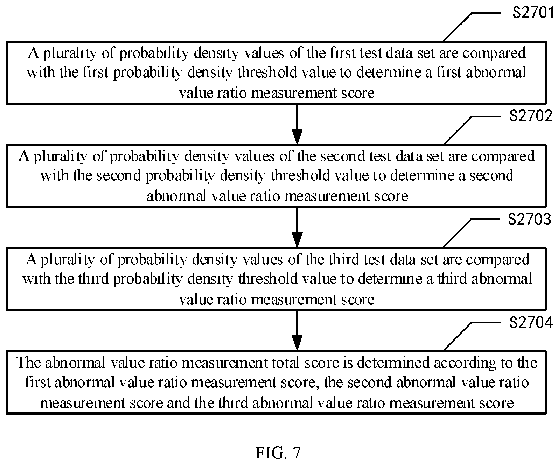

FIG. 6 schematically shows a flowchart of a process of determining a running state score of a virtual machine using a function distribution measurement. FIG. 7 schematically shows a flowchart of a process of determining a running state score of a virtual machine by an abnormal value ratio measurement.

Referring to FIG. 6, the above-mentioned operations S260 include sub-operations S2601 to S2604.

In sub-operation S2601, the first probability density distribution curve (as shown in FIG. 5A) of the first training data set is compared with the first probability density distribution curve of the first test data set to determine a first probability density distribution measurement score.

For example, in sub-operation S2601, a Wasserstein distance between the first probability density distribution curve of the first training data set and the first probability density distribution curve of the first test data set may be calculated, and the Wasserstein distance may be mapped into a centesimal system (e.g., may be mapped according to a mapping relationship in Table 1) to acquire the first probability density distribution measurement score.

In sub-operation S2602, the second probability density distribution curve (as shown in FIG. 5B) of the second training data set is compared with the second probability density distribution curve of the second test data set to determine a second probability density distribution measurement score.

For example, in sub-operation S2602, a Wasserstein distance between the second probability density distribution curve of the second training data set and the second probability density distribution curve of the second test data set may be calculated, and the Wasserstein distance may be mapped into a centesimal system (e.g., may be mapped according to the mapping relationship in Table 1) to acquire the second probability density distribution measurement score.

In sub-operation S2603, the third probability density distribution curve (as shown in FIG. 5C) of the third training data set is compared with the third probability density distribution curve of the third test data set to determine a third probability density distribution measurement score.

For example, in sub-operation S2603, a Wasserstein distance between the third probability density distribution curve of the third training data set and the third probability density distribution curve of the third test data set may be calculated, and the Wasserstein distance may be mapped into a centesimal system (e.g., may be mapped according to the mapping relationship in Table 1) to acquire the third probability density distribution metric score.

It should be noted that the Wasserstein distance measures a distance between two probability distributions. The Wesserstein distance is also called an Earth-Mover distance.

Table 1 Mapping relationship between Wasserstein distance and centesimal system

| Wasserstein distance | Score in centesimal system |
|---|---|
| dis_was < 1 | Floor(int((1-dis_was)*100) |
| 1=<dis_was< 2 | Floor(int((2-dis_was)/2*100) |
| 2=<dis_was< 3 | Floor(int((3-dis_was)/3*100) |
| 3=<dis_was< 4 | Floor(int((4-dis_was)/4*100) |

In the table, dis_was represents the Wasserstein distance, and an int function and a floor function represent rounding. The int function directly truncates a decimal part, and the floor function obtains an integer closest to original number but less than the original number.

In sub-operation S2604, the probability density distribution measurement total score is determined according to the first probability density distribution measurement score, the second probability density distribution measurement score and the third probability density distribution measurement score by:

$$sm = wm1 \times smc1 + wm2 \times smc2 + wm3 \times smc3 \quad (2),$$

where sm is the probability density distribution measurement total score, smc1 is the first probability density distribution measurement score, smc2 is the second probability density distribution measurement score, smc3 is the third probability density distribution measurement score, and wm1, wm2 and wm3 are weight coefficients of the first probability density distribution measurement score, the second probability density distribution measurement score, and the third probability density distribution measurement score.

In embodiments of the present disclosure, the weight coefficients wm1, wm2 and wm3 are determined according to a result of the correlation analysis. For example, in the above-mentioned correlation analysis, the network receiving traffic and the network sending traffic have a high correlation, and the CPU utilization and other two indicators have a low correlation. Therefore, the weight coefficient wm1 of the first probability density distribution measurement score is greater than any one of the weight coefficient wm2 of the second probability density distribution measurement score and the weight coefficient wm3 of the third probability density distribution measurement score. In addition, in embodiments of the present disclosure, more attention may be paid to the network receiving traffic than the network sending traffic. Therefore, the weight coefficient wm2 of the second probability density distribution measurement score is greater than the weight coefficient wm3 of the third probability density distribution measurement score.

For example, wm1 may be 0.5, wm2 may be 0.3, and wm3 may be 0.2. In this way, the above-mentioned equation (2) may be changed into:

$$sm = 0.5 \times smc1 + 0.3 \times smc2 + 0.2 \times smc3.$$

In embodiments of the present disclosure, samples in a sampling time window (which may be fine-grained one-day data in seconds, or coarse-grained one-day data per hour) are tested. After the feature engineering is completed, a probability density distribution in each dimension is obtained on three probability density models, and a Wasserstein distance between the probability density distribution and a probability density distribution of training samples is calculated. The Wasserstein distance is an indicator for measuring a difference between two distributions. The smaller a value of the Wasserstein distance represents that the closer a distribution of test samples and a distribution of the training samples. The value of the Wasserstein distance value is mapped into the centesimal system. The mapping relationship is shown in Table 1. Therefore, a score of the function distribution difference measurement may be obtained in each dimension, and a total score may be obtained by combining three scores. In this way, a built single-dimension model may model more accurately for each dimension indicator itself to obtain an accurate detection result. A final detection score of the virtual machine is derived from an integration of all single-dimension results, so that an accuracy of a final detection score may be further improved. At the same time, the single-dimension model is more convenient for operation and maintenance personnel to know exactly which indicator causes an abnormality of the virtual machine, and a result obtained is clearer and more interpretable.

Referring to FIG. 7, the above-mentioned operation S270 includes sub-operations S2701 to S2704.

In sub-operation S2701, a plurality of probability density values of the first test data set are compared with the first probability density threshold value to determine a first abnormal value ratio measurement score.

For example, the determining a first probability density threshold value of the first training data set includes: ranking a plurality of probability density values of the first training data set of the first feature in an order of small to large; and taking the probability density value ranked at $N1^{th}$ as the first probability density threshold value, wherein $N1 = int(10\% \times N10)$, N10 is a total number of the plurality of probability density values of the first training data set, and int represents a rounding operation.

Specifically, in sub-operation S2701, a proportion of a number of probability density values less than the first probability density threshold value among the plurality of probability density values of the first test data set to a total number of the plurality of probability density values of the first test data set is calculated; and the proportion is mapped into a centesimal system (e.g., according to a mapping relationship in Table 2) to acquire the first abnormal value ratio measurement score.

In sub-operation S2702, a plurality of probability density values of the second test data set are compared with the second probability density threshold value to determine a second abnormal value ratio measurement score.

For example, the determining a second probability density threshold value of the second training data set includes: ranking a plurality of probability density values of the second training data set of the second feature in an order of small to large; and taking the probability density value ranked at $N2^{th}$ as the second probability density threshold value, wherein $N2 = int(10\% \times N20)$, N20 is a total number of the plurality of probability density values of the second training data set, and int represents a rounding operation.

Specifically, in sub-operation S2702, a proportion of a number of probability density values less than the second probability density threshold value among the plurality of probability density values of the second test data set to a total number of the plurality of probability density values of the second test data set is calculated; and the proportion is mapped into a centesimal system (e.g., according to the mapping relationship in Table 2) to acquire the second abnormal value ratio measurement score.

In sub-operation S2703, a plurality of probability density values of the third test data set are compared with the third probability density threshold value to determine a third abnormal value ratio measurement score.

For example, the determining a third probability density threshold value of the third training data set includes: ranking a plurality of probability density values of the third training data set of the third feature in an order of small to large; and taking the probability density value ranked at N3th as the third probability density threshold value, wherein N3 = int(10% × N30), N30 is a total number of the plurality of probability density values of the third training data set, and int represents a rounding operation.

Specifically, in sub-operation S2703, a proportion of a number of probability density values less than the third probability density threshold value among the plurality of probability density values of the third test data set to a total number of the plurality of probability density values of the third test data set is calculated; and the proportion is mapped into a centesimal system (e.g., according to the mapping relationship in Table 2) to acquire the third abnormal value ratio measurement score.

Table 2 Mapping relationship between threshold value and centesimal system

| Proportion below density threshold value | Score in centesimal system |
|---|---|
| percent < =10% | floor((1-percent)*100) |
| 10% <percent < =20% | floor((1-percent)*100*0.9) |
| 20% <percent < =30% | floor((1-percent)*100*0.8) |
| 30% <percent < =50% | floor((1-percent)*100*0.6) |
| 50% <percent < 70% | floor((1-percent)*100*0.4) |
| 70% <percent | floor((1-percent)*100*0.2) |

In the table, percent represents a proportion of density values below a density threshold value in the test data set, and a floor function represents rounding. The floor function obtains an integer closest to original number but less than the original number.

In sub-operation S2704, the abnormal value ratio measurement total score is determined according to the first abnormal value ratio measurement score, the second abnormal value ratio measurement score and the third abnormal value ratio measurement score by:

$$st \; = \; wt1 \times stc1 \; + wt2 \times stc2 \; + wt3 \times stc3 \; (3),$$

where st is the abnormal value ratio measurement total score, stc1 is the first abnormal value ratio measurement score, stc2 is the second abnormal value ratio measurement score, stc3 is the third abnormal value ratio measurement score, and wt1, wt2 and wt3 are weight coefficients of the first abnormal value ratio measurement score, the second abnormal value ratio measurement score, and the third abnormal value ratio measurement score.

In embodiments of the present disclosure, the weight coefficients wt1, wt2 and wt3 are determined according to the result of the correlation analysis. For example, in the above-mentioned correlation analysis, the network receiving traffic and the network sending traffic have a high correlation, and the CPU utilization and other two indicators have a low correlation. Therefore, the weight coefficient wt1 of the first abnormal value ratio measurement score is greater than any one of the weight coefficient wt2 of the second abnormal value ratio measurement score and the weight coefficient wt3 of the third abnormal value ratio measurement score. In addition, in embodiments of the present disclosure, more attention may be paid to the network receiving traffic than the network sending traffic. Therefore, the weight coefficient wt2 of the second abnormal value ratio measurement score is greater than the weight coefficient wt3 of the third abnormal value ratio measurement score.

For example, wt1 may be 0.5, wt2 may be 0.3, and wt3 may be 0.2. In this way, the above-mentioned equation (3) may be changed into:

$$st \; = \; 0.5 \times stc1 \; + 0.3 \times stc2 \; + 0.2 \times stc3.$$

In embodiments of the present disclosure, since the training data set is not labeled, a small amount of abnormal data may exist, and a proportion of abnormal values in a historical manual statistic evaluated by professionals may be about 10%. In the embodiments, it is determined that the virtual machine is in an abnormal state when a probability density value obtained in a training model is low. The low probability density value means that a value near a resource utilization has a low probability of occurrence, that is, the maximum or minimum value, and has a small frequency of occurrence. Therefore, the probability density values of each dimension obtained by training are ranked in an ascending order, and the probability density value ranked at TOP N=[int (10% * total probability density)] is extracted as a threshold value warning line. The higher a proportion of probability density values of statistical test samples less than a warning interval, the greater a proportion of abnormality of the test sample, and the less a score of the virtual machine.

In embodiments of the present disclosure, in the above-mentioned operation S280, the determining a virtual machine state total score according to the probability density distribution measurement total score and the abnormal value ratio measurement total score includes: determining the virtual machine state total score according to the probability density distribution measurement total score and the abnormal value ratio measurement total score by:

$$ss = ws1 \times sm + ws2 \times st \ (4),$$

where ss is the virtual machine state total score, sm is the probability density distribution measurement total score, st is the abnormal value ratio measurement total score, ws1 is a weight coefficient of the probability density distribution measurement total score, and ws2 is a weight coefficient of the abnormal value ratio measurement total score.

For example, since a threshold value set for the abnormal value ratio is relatively sensitive, which may have a great impact on a result, in order to reduce an error, an assigned weight of results of two measurement indicators may be ws1>ws2. For example, ws1 may be 0.6, and ws2 may be 0.4. In this way, the above-mentioned equation (4) may be changed into:

$$ss = 0.6 \times sm + 0.4 \times st.$$

In embodiments of the present disclosure, in the above-mentioned operation S290, the determining the running state of the virtual machine according to the virtual machine state total score includes: determining that the virtual machine is in an abnormal running state in response to the virtual machine state total score being less than a first scoring threshold value; determining that the virtual machine is in a high potential abnormal state in response to the virtual machine state total score being in a first interval defined by the first scoring threshold value and a second scoring threshold value; and determining that the virtual machine is in a low potential abnormal state in response to the virtual machine state total score being in a second interval defined by the second scoring threshold value and a third scoring threshold value.

Optionally, the determining the running state of the virtual machine according to the virtual machine state total score includes: determining that the virtual machine is in a good running state in response to the virtual machine state total score being in a third interval defined by the third scoring threshold value and a fourth scoring threshold value; and determining that the virtual machine is in an excellent running state in response to the virtual machine state total score being greater than the fourth scoring threshold value.

For example, the following table 3 may be created:

Table 3 Virtual machine anomaly indicators

| ss | Running state of virtual machine |
|---|---|
| Above 90 | Excellent |
| 80 to 90 | Good |
| 70 to 80 | Low potential abnormality |
| 60 to 70 | High potential abnormality |
| Below 60 | Abnormal |

That is, when the virtual machine state total score is below 60 points, it is determined that the virtual machine is in the abnormal running state; when the virtual machine state total score is in a range of 60 points to 70 points, it is determined that the virtual machine is in the high potential abnormal state; when the virtual machine state total score is in a range of 70 points to 80 points, it is determined that the virtual machine is in the low potential abnormal state; when the virtual machine state total score is in a range of 80 points to 90 points, it is determined that the virtual machine is in the good running state; and when the virtual machine state total score is above 90 points, it is determined that the virtual machine is in the excellent running state.

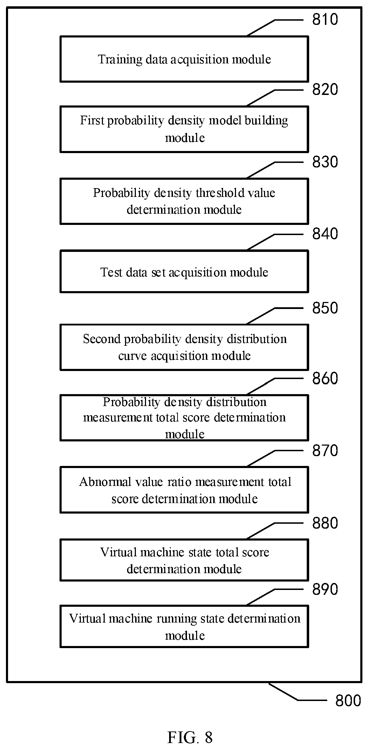

Based on the above-mentioned method of detecting the running state of the virtual machine based on the kernel density estimation, embodiments of the present disclosure further provide an apparatus of detecting a running state of a virtual machine based on a kernel density estimation. The apparatus will be described below in detail with reference to FIG. 8.

FIG. 8 shows a structural block diagram of an apparatus of detecting a running state of a virtual machine based on a kernel density estimation according to exemplary embodiments not forming part of the present invention.

As shown in FIG. 8, an apparatus 800 of detecting a running state of a virtual machine based on a kernel density estimation includes a training data acquisition module 810, a first probability density model building module 820, a probability density threshold value determination module 830, a test data set acquisition module 840, a second probability density distribution curve acquisition module 850, a probability density distribution measurement total score determination module 860, and an abnormal value ratio measurement total score determination module 870, a virtual machine state total score determination module 880 and a virtual machine running state determination module 890.

The training data acquisition module 810 is used to acquire a training data set of at least one feature, wherein the at least one feature is used to characterize at least one running state of the virtual machine. In some exemplary embodiments, the training data acquisition module 810 may be used to perform the above-mentioned operation S210 and a sub-operation thereof, which will not be repeated here.

The first probability density model building module 820 is used to build a probability density model for the training data set of the at least one feature by using a kernel density estimation algorithm, so as to obtain a probability density distribution curve of the training data set of the at least one feature. In some exemplary embodiments, the first probability density model building module 820 may be used to perform the above-mentioned operation S220 and a sub-operation thereof, which will not be repeated here.

The probability density threshold value determination module 830 is used to determine a probability density threshold value of the training data set of the at least one feature according to the probability density model. In some exemplary embodiments, the probability density threshold value determination module 830 may be used to perform the above-mentioned operation S230 and a sub-operation thereof, which will not be repeated here.

The test data set acquisition module 840 is used to acquire a test data set of the at least one feature. In some exemplary embodiments, the test data set acquisition module 840 may be used to perform the above-mentioned operation S240 and a sub-operation thereof, which will not be repeated here.

The second probability density distribution curve acquisition module 850 is used to acquire a probability density distribution curve of the test data set of the at least one feature according to the constructed probability density model. In some exemplary embodiments, the second probability density distribution curve acquisition module 850 may be used to perform the above-mentioned operation S250 and a sub-operation thereof, which will not be repeated here.

The probability density distribution measurement total score determination module 860 is used to compare the probability density distribution curve of the training data set of the at least one feature with the probability density distribution curve of the test data set of the at least one feature to determine a probability density distribution measurement total score. In some exemplary embodiments, the probability density distribution measurement total score determination module 860 may be used to perform the above-mentioned operation S260 and a sub-operation thereof, which will not be repeated here.

The abnormal value ratio measurement total score determination module 870 is used to compare a plurality of probability density values of the test data set of the at least one feature with the probability density threshold value to determine an abnormal value ratio measurement total score. In some exemplary embodiments, the abnormal value ratio measurement total score determination module 870 may be used to perform the above-mentioned operation S270 and a sub-operation thereof, which will not be repeated here.

The virtual machine state total score determination module 880 is used to determine a virtual machine state total score according to the probability density distribution measurement total score and the abnormal value ratio measurement total score. In some exemplary embodiments, the virtual machine state total score determination module 880 may be used to perform the above-mentioned operation S280 and a sub-operation thereof, which will not be repeated here.

The virtual machine running state determination module 890 is used to determine the running state of the virtual machine according to the virtual machine state total score. In some exemplary embodiments, the virtual machine running state determination module 890 may be used to perform the above-mentioned operation S290 and a sub-operation thereof, which will not be repeated here.

According to embodiments of the present disclosure, any number of modules in the training data acquisition module 810, the first probability density model building module 820, the probability density threshold value determination module 830, the test data set acquisition module 840, the second probability density distribution curve acquisition module 850, the probability density distribution measurement total score determination module 860, the abnormal value ratio measurement total score determination module 870, the virtual machine state total score determination module 880 and the virtual machine running state determination module 890 may be combined into a module to be implemented, or any one of the modules may be divided into a plurality of modules. Alternatively, at least some functions of one or more of the modules may be combined with at least some functions of other modules and implemented in a module. According to embodiments of the present disclosure, at least one of the training data acquisition module 810, the first probability density model building module 820, the probability density threshold value determination module 830, the test data set acquisition module 840, the second probability density distribution curve acquisition module 850, the probability density distribution measurement total score determination module 860, the abnormal value ratio measurement total score determination module 870, the virtual machine state total score determination module 880 and the virtual machine running state determination module 890 may be implemented at least partially as a hardware circuit, such as a field programmable gate array (FPGA), a programmable logic array (PLA), a system on chip, a system on substrate, a system on package, and an application specific integrated circuit (ASIC), or may be implemented by a hardware or firmware such as any other reasonable method of integrating or packaging the circuit, or may be implemented by any one or any combinations of the three implementation methods of software, hardware and firmware. Alternatively, at least one of the training data acquisition module 810, the first probability density model building module 820, the probability density threshold value determination module 830, the test data set acquisition module 840, the second probability density distribution curve acquisition module 850, the probability density distribution measurement total score determination module 860, the abnormal value ratio measurement total score determination module 870, the virtual machine state total score determination module 880 and the virtual machine running state determination module 890 may be at least partially implemented as a computer program module. The computer program module, when run, may perform corresponding functions.

In the method according to embodiments of the present disclosure, a virtual machine anomaly detection scoring mechanism is provided, which may make full use of characteristics of historical data and a probability density function, and design two measurement indicators to quantify a health status of the virtual machine. That is, a health condition of the virtual machine may be qualified by combining the above-mentioned two measurement indicators, so that the running state of the virtual machine may be determined quickly and intuitively.

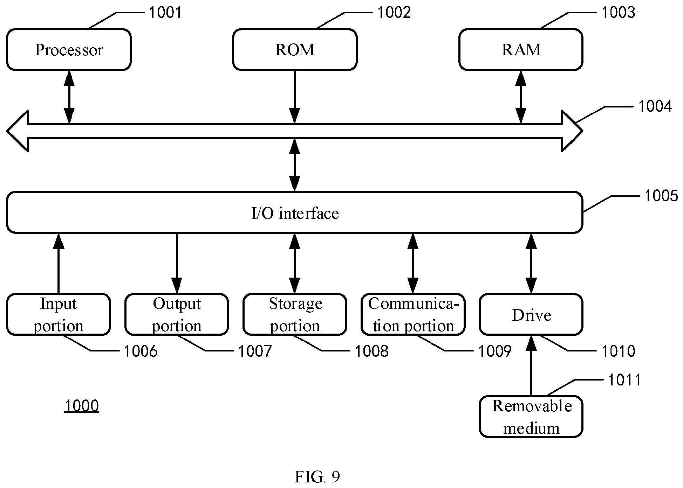

FIG. 9 schematically shows a structural block diagram of an electronic device suitable for implementing the above-mentioned method according to exemplary embodiments of the present disclosure.

As shown in FIG. 9, an electronic device 1000 according to embodiments of the present disclosure includes a processor 1001, which may perform various appropriate actions and processes according to a program stored in a read-only memory (ROM) 1002 or a program loaded into a random access memory (RAM) 1003 from a storage portion 1008. The processor 1001 may include, for example, a general-purpose microprocessor (e.g., a CPU), an instruction provided processor and/or a related chipset and/or a dedicated-purpose microprocessor (e.g., an application specific integrated circuit (ASIC)), etc. The processor 1001 may further include an on-board memory for caching purposes. The processor 1001 may include a single processing unit or a plurality of processing units for performing different actions of the method flow according to embodiments of the present disclosure.

The RAM 1003 stores various programs and data required for an operation of electronic device 1000. The processor 1001, the ROM 1002 and the RAM 1003 are connected to each other through a bus 1004. The processor 1001 performs various operations of the method flow according to embodiments of the present disclosure by executing a program in the ROM 1002 and/or the RAM 1003. It should be noted that the program may also be stored in one or more memories other than the ROM 1002 and the RAM 1003. The processor 1001 may also perform various operations of the method flow according to embodiments of the present disclosure by executing programs stored in the one or more memories.

According to embodiments of the present disclosure, the electronic device 1000 may further include an input/output (I/O) interface 1005, and the input/output (I/O) interface 1005 is also connected to the bus 1004. The electronic device 1000 may further include one or more of following components connected to the I/O interface 1005, including: an input portion 1006 including a keyboard, a mouse, etc.; an output portion 1007 including a cathode ray tube (CRT), a liquid crystal display (LCD), etc., and a speaker, etc.; a storage portion 1008 including a hard disk, etc.; and a communication portion 1009 including a network interface card such as a LAN card, a modem, etc. The communication portion 1009 performs a communication processing via a network such as the Internet. A drive 1010 is also connected to the I/O interface 1005 as required. A removable medium 1011, such as a magnetic disk, an optical disk, a magneto-optical disk, a semiconductor memory, or the like, is installed on the drive 1010 as required, so that a computer program read therefrom may be installed into the storage portion 1008 as required.

The present disclosure further provides a computer-readable storage medium. The computer-readable storage medium may be included in the device/apparatus/system described in the above-mentioned embodiments; the computer-readable storage medium may also exist alone without being assembled into the device/apparatus/system. The above-mentioned computer-readable storage medium carries one or more programs. The above-mentioned one or more programs, when executed, may implement the method according to embodiments of the present disclosure.

According to embodiments of the present disclosure, the computer-readable storage medium may be a non-volatile computer-readable storage medium. For example, the non-volatile computer-readable storage medium includes, but is not limited to: a portable computer disk, a hard disk, a random access memory (RAM), a read-only memory (ROM), an erasable programmable read-only memory (EPROM or a flash memory), a portable compact disk read-only memory (CD-ROM), an optical storage element, a magnetic storage element, or any suitable combination thereof. In the present disclosure, the computer-readable storage medium may be any tangible medium containing or storing a program, and the program may be used by or in combination with an instruction execution system, apparatus or element. For example, according to embodiments of the present disclosure, the computer-readable storage medium may include one or more memories other than the ROM 1002 and/or the RAM 1003 and/or the ROM 1002 and the RAM 1003 described above.

Embodiments of the present disclosure further provide a computer program product, including a computer program. The computer program includes a program code for performing the method shown in the flowchart. When the computer program product runs in a computer system, the program code is used to cause the computer system to implement the method provided by embodiments of the present disclosure.

The above-mentioned functions defined in the system/apparatus of embodiments of the present disclosure are performed when the computer program is executed by the processor 1001. According to embodiments of the present disclosure, the system, the apparatuses, the modules, the units, etc. described above may be implemented by the computer program module.

In an embodiment, the computer program may rely on a tangible storage medium such as an optical storage element, a magnetic memory element, etc. In another embodiment, the computer program may also be transmitted and distributed in a form of a signal on a network medium, downloaded and installed through the communication portion 1009, and/or installed from the removable medium 1011. The program code contained in the computer program may be transmitted by any suitable network medium, including but not limited to: wireless, wired, etc., or any suitable combination thereof.

In the embodiments, the computer program may be downloaded and installed from the network through the communication portion 1009, and/or installed from the removable medium 1011. The computer program, when executed by the processor 1001, performs the above-mentioned functions defined in the system of embodiments of the present disclosure. According to embodiments of the present disclosure, the system, the apparatuses, devices, the modules, the units, etc. described above may be implemented by the computer program module.

According to embodiments of the present disclosure, the program code for executing the computer programs provided by embodiments of the present disclosure may be written in any combination of one or more programming languages. Specifically, the computing programs may be implemented using a high-level procedure and/or an object-oriented programming language, and/or an assembly/machine language. The programming language includes, but is not limited to Java, C++, python, "C" language or a similar programming language. The program code may be completely executed on a user computing device, partially executed on a user device, partially executed on a remote computing device, or completely executed on the remote computing device or a server. In a case of involving the remote computing device, the remote computing device may be connected to the user computing device through any kind of network, including a local area network (LAN) or a wide area network (WAN), or may be connected to an external computing device (for example, connected through the Internet using an Internet service provider).

The flowcharts and block diagrams in the accompanying drawings illustrate possibly implemented architectures, functions and operations of the systems, methods and computer program products according to various embodiments of the present disclosure. In this regard, each block in the flowcharts or block diagrams may represent a module, a program segment, or part of a code. The above-mentioned module, program segment, or part of the code contains one or more executable instructions for realizing specified logic functions. It should also be noted that in some alternative implementations, functions marked in the blocks may also occur in a different order from those marked in the accompanying drawings. For example, two consecutive blocks may actually be performed in parallel, and sometimes they may be performed in a reverse order, which depends on the functions involved. It should also be noted that each block in the block diagrams or flowcharts and a combination of blocks in the block diagrams or flowcharts may be implemented by a dedicated hardware-based system that performs specified functions or operations, or by a combination of a dedicated hardware and computer instructions.

**Claims**

1. A method of detecting a running state of a virtual machine based on a kernel density estimation, comprising:

   acquiring (S210) a training data set of at least one feature, wherein the at least one feature is configured to characterize at least one running state of the virtual machine;
   building (S220) a probability density model for the training data set of the at least one feature by using a kernel density estimation algorithm, so as to obtain a probability density distribution curve of the training data set of the at least one feature;
   determining (S230) a probability density threshold value of the training data set of the at least one feature according to the probability density model;
   acquiring (S240) a test data set of the at least one feature;
   acquiring (S250) a probability density distribution curve of the test data set of the at least one feature according to the built probability density model;
   calculating (S260) a Wasserstein distance between the probability density distribution curve of the training data set of the at least one feature and the probability density distribution curve of the test data set of the at least one feature, and mapping the Wasserstein distance into a centesimal system, to determine a probability density distribution measurement total score;

calculating (S270) a proportion of a number of probability density values less than a probability density threshold value among the plurality of probability density values of the test data set of the at least one feature to a total number of the plurality of probability density values of the test data set of the at least one feature, and mapping the proportion into a centesimal system, to determine an abnormal value ratio measurement total score;

determining (S280) a virtual machine state total score according to the probability density distribution measurement total score and the abnormal value ratio measurement total score; and

determining (S290) the running state of the virtual machine according to the virtual machine state total score, wherein the determining a virtual machine state total score according to the probability density distribution measurement total score and the abnormal value ratio measurement total score comprises:

determining the virtual machine state total score according to the probability density distribution measurement total score and the abnormal value ratio measurement total score by:

$$ss = ws1 \times sm + ws2 \times st,$$

where ss is the virtual machine state total score, sm is the probability density distribution measurement total score, st is the abnormal value ratio measurement total score, ws1 is a weight coefficient of the probability density distribution measurement total score, and ws2 is a weight coefficient of the abnormal value ratio measurement total score,
wherein

$$ws1 > ws2,$$

wherein the at least one feature comprises a first feature, a second feature and a third feature, and the first feature, the second feature and the third feature are configured to characterize different running states of the virtual machine respectively; and

the acquiring a training data set of at least one feature comprises: simultaneously acquiring a first training data set of the first feature, a second training data set of the second feature, and a third training data of the third feature,

wherein the building a probability density model for the training data set of the at least one feature by using a kernel density estimation algorithm so as to obtain a probability density distribution curve of the training data set of the at least one feature comprises:

building probability density models respectively for the first training data set of the first feature, the second training data set of the second feature and the third training data set of the third feature by using the kernel density estimation algorithm, so as to obtain a first probability density distribution curve of the first training data set, a second probability density distribution curve of the second training data set and a third probability density distribution curve of the third training data set,

wherein the determining a probability density threshold value of the training data set of the at least one feature according to the probability density model comprises:

determining a first probability density threshold value of the first training data set, a second probability density threshold value of the second training data set and a third probability density threshold value of the third training data set according to the probability density distribution curve,

wherein the acquiring a test data set of the at least one feature comprises: simultaneously acquiring a first test data set of the first feature, a second test data set of the second feature and a third test data set of the third feature,

wherein the acquiring a probability density distribution curve of the test data set of the at least one feature according to the built probability density model comprises:

respectively acquiring a first probability density distribution curve of the first test data set, a second probability density distribution curve of the second test data set and a third probability density distribution curve of the third test data set according to the built probability density model,

wherein the calculating (S260) a Wasserstein distance between the probability density distribution curve of the training data set of the at least one feature and the probability density distribution curve of the test data set of the at least one feature, and mapping the Wasserstein distance into a centesimal system, to determine a probability density distribution measurement total score comprises:

calculating (S2601) a Wasserstein distance between the first probability density distribution curve of the first training data set and the first probability density distribution curve of the first test data set, and mapping the Wasserstein distance into a centesimal system, to determine a first probability density distribution measurement score;

calculating (S2602) a Wasserstein distance between the second probability density distribution curve of the second training data set and the second probability density distribution curve of the second test data set, and mapping the Wasserstein distance into a centesimal system, to determine a second probability density distribution measurement score; and

calculating (S2603) a Wasserstein distance between the third probability density distribution curve of the third training data set and the third probability density distribution curve of the third test data set, and mapping the Wasserstein distance into a centesimal system, to determine a third probability density distribution measurement score,

wherein the calculating (S260) a Wasserstein distance between the probability density distribution curve of the training data set of the at least one feature and the probability density distribution curve of the test data set of the at least one feature, and mapping the Wasserstein distance into a centesimal system, to determine a probability density distribution measurement total score comprises:

determining (S2604) the probability density distribution measurement total score according to the first probability density distribution measurement score, the second probability density distribution measurement score and the third probability density distribution measurement score by:

$$ sm = wm1 \times smc1 + wm2 \times smc2 + wm3 \times smc3, $$

where sm is the probability density distribution measurement total score, smc1 is the first probability density distribution measurement score, smc2 is the second probability density distribution measurement score, smc3 is the third probability density distribution measurement score, and wm1, wm2 and wm3 are weight coefficients of the first probability density distribution measurement score, the second probability density distribution measurement score, and the third probability density distribution measurement score,

wherein the calculating (S270) a proportion of a number of probability density values less than a probability density threshold value among the plurality of probability density values of the test data set of the at least one feature to a total number of the plurality of probability density values of the test data set of the at least one feature, and mapping the proportion into a centesimal system, to determine an abnormal value ratio measurement total score comprises:

calculating (S2701) a proportion of a number of probability density values less than the first probability density threshold value among the plurality of probability density values of the first test data set to a total number of the plurality of probability density values of the first test data set, and mapping the proportion into a centesimal system, to determine a first abnormal value ratio measurement score;

calculating (S2702) a proportion of a number of probability density values less than the second probability density threshold value among the plurality of probability density values of the second test data set to a total number of the plurality of probability density values of the second test data set, and mapping the proportion into a centesimal system, to determine a second abnormal value ratio measurement score; and

calculating (S2703) a proportion of a number of probability density values less than the third probability density threshold value among the plurality of probability density values of the third test data set to a total number of the plurality of probability density values of the third test data set, and mapping the proportion into a centesimal system, to determine a third abnormal value ratio measurement score,

wherein the calculating (S270) a proportion of a number of probability density values less than a probability density threshold value among the plurality of probability density values of the test data set of the at least one feature to a total number of the plurality of probability density values of the test data set of the at least one feature, and mapping the proportion into a centesimal system, to determine an abnormal value ratio measurement total score comprises:

determining (S2704) the abnormal value ratio measurement total score according to the first abnormal value ratio measurement score, the second abnormal value ratio measurement score and the third abnormal value ratio measurement score by:

$$st = wt1 \times stc1 + wt2 \times stc2 + wt3 \times stc3,$$

where st is the abnormal value ratio measurement total score, stc1 is the first abnormal value ratio measurement score, stc2 is the second abnormal value ratio measurement score, stc3 is the third abnormal value ratio measurement score, and wt1, wt2 and wt3 are weight coefficients of the first abnormal value ratio measurement score, the second abnormal value ratio measurement score, and the third abnormal value ratio measurement score,

wherein the determining a first probability density threshold value of the first training data set comprises: ranking a plurality of probability density values of the first training data set of the first feature in an order of small to large; and taking the probability density value ranked at $N1^{th}$ as the first probability density threshold value, wherein $N1 = int(10\% \times N10)$, N10 is a total number of the plurality of probability density values of the first training data set, and int represents a rounding operation; and/or,

the determining a second probability density threshold value of the second training data set comprises: ranking a plurality of probability density values of the second training data set of the second feature in an order of small to large; and taking the probability density value ranked at $N2^{th}$ as the second probability density threshold value, wherein $N2 = int(10\% \times N20)$, N20 is a total number of the plurality of probability density values of the second training data set, and int represents a rounding operation; and/or,

the determining a third probability density threshold value of the third training data set comprises: ranking a plurality of probability density values of the third training data set of the third feature in an order of small to large; and taking the probability density value ranked at $N3^{th}$ as the third probability density threshold value, wherein $N3 = int(10\% \times N30)$, N30 is a total number of the plurality of probability density values of the third training data set, and int represents a rounding operation.

2. The method according to claim 1, wherein the determining the running state of the virtual machine according to the virtual machine state total score comprises:

determining that the virtual machine is in an abnormal running state in response to the virtual machine state total score being less than a first scoring threshold value;

determining that the virtual machine is in a high potential abnormal state in response to the virtual machine state total score being in a first interval defined by the first scoring threshold value and a second scoring threshold value; and

determining that the virtual machine is in a low potential abnormal state in response to the virtual machine state total score being in a second interval defined by the second scoring threshold value and a third scoring threshold value,

wherein the determining the running state of the virtual machine according to the virtual machine state total score comprises:

determining that the virtual machine is in a good running state in response to the virtual machine state total score being in a third interval defined by the third scoring threshold value and a fourth scoring threshold value; and

determining that the virtual machine is in an excellent running state in response to the virtual machine state total score being greater than the fourth scoring threshold value.

3. The method according to claim 1, wherein the first feature is a CPU utilization, the second feature is a network receiving traffic, and the third feature is a network sending traffic,
wherein at least one of the acquiring a training data set of at least one feature and the acquiring a test data set of the at least one feature comprises:

collecting (S310) primary monitoring data of the virtual machine within a specified time period, wherein the primary monitoring data comprises a virtual machine number, a collection timestamp, CPU usage time of the virtual machine, a network receiving traffic and a network sending traffic;
aggregating (S320) the collected primary monitoring data according to the virtual machine number;
extracting (S330) data of a plurality of features within a predetermined time period from the aggregated primary monitoring data; and
fusing (S340) the data of the plurality of features according to the collection timestamp to form a feature vector.

4. The method according to claim 1, wherein the method further comprises:

performing a correlation analysis on the first training data set of the first feature, the second training data set of the second feature and the third training data set of the third feature; and
determining weight coefficients wm1, wm2 and wm3 and weight coefficients wt1, wt2 and wt3 according to a result of the correlation analysis,
wherein a correlation between the second training data set of the second feature and the third training data set of the third feature is greater than a correlation between the first training data set of the first feature and the second training data set of the second feature, and the correlation between the second training data set of the second feature and the third training data set of the third feature is greater than a correlation between the first training data set of the first feature and the third training data set of the third feature; and
the weight coefficient wm1 is greater than any one of the weight coefficients wm2 and wm3, and the weight coefficient wt1 is greater than any one of the weight coefficients wt2 and wt3,
wherein the weight coefficient wm2 is greater than the weight coefficient wm3, and the weight coefficient wt2 is greater than the weight coefficient wt3.

5. An apparatus of detecting a running state of a virtual machine based on a kernel density estimation, comprising:

a training data acquisition module configured to acquire a training data set of at least one feature, wherein the at least one feature is configured to characterize at least one running state of the virtual machine;
a first probability density model building module configured to build a probability density model for the training data set of the at least one feature by using a kernel density estimation algorithm, so as to obtain a probability density distribution curve of the training data set of the at least one feature;
a probability density threshold value determination module configured to determine a probability density threshold value of the training data set of the at least one feature according to the probability density model;
a test data set acquisition module configured to acquire a test data set of the at least one feature;
a second probability density distribution curve acquisition module configured to acquire a probability density distribution curve of the test data set of the at least one feature according to the built probability density model;
a probability density distribution measurement total score determination module configured to calculate (S260) a Wasserstein distance between the probability density distribution curve of the training data set of the at least one feature and the probability density distribution curve of the test data set of the at least one feature, and map the Wasserstein distance into a centesimal system, to determine a probability density distribution measurement total score;
an abnormal value ratio measurement total score determination module configured to calculate (S270) a proportion of a number of probability density values less than a probability density threshold value among the plurality of probability density values of the test data set of the at least one feature to a total number of the plurality of probability density values of the test data set of the at least one feature, and map the proportion into a centesimal system, to determine an abnormal value ratio measurement total score;
a virtual machine state total score determination module configured to determine a virtual machine state total score according to the probability density distribution measurement total score and the abnormal value ratio measurement total score; and

a virtual machine running state determination module configured to determine the running state of the virtual machine according to the virtual machine state total score,

wherein the virtual machine state total score is determined according to the probability density distribution measurement total score and the abnormal value ratio measurement total score by:

determining the virtual machine state total score according to the probability density distribution measurement total score and the abnormal value ratio measurement total score by:

$$ss \ = \ ws1 \times sm \ + ws2 \times st,$$

where ss is the virtual machine state total score, sm is the probability density distribution measurement total score, st is the abnormal value ratio measurement total score, ws1 is a weight coefficient of the probability density distribution measurement total score, and ws2 is a weight coefficient of the abnormal value ratio measurement total score,

wherein

$$ws1 > ws2,$$

wherein the at least one feature comprises a first feature, a second feature and a third feature, and the first feature, the second feature and the third feature are configured to characterize different running states of the virtual machine respectively; and

wherein the training data set of at least one feature is acquired by: simultaneously acquiring a first training data set of the first feature, a second training data set of the second feature, and a third training data of the third feature,

wherein the probability density model is built for the training data set of the at least one feature by using a kernel density estimation algorithm so as to obtain a probability density distribution curve of the training data set of the at least one feature comprises:

building probability density models respectively for the first training data set of the first feature, the second training data set of the second feature and the third training data set of the third feature by using the kernel density estimation algorithm, so as to obtain a first probability density distribution curve of the first training data set, a second probability density distribution curve of the second training data set and a third probability density distribution curve of the third training data set,

wherein the probability density threshold value of the training data set of the at least one feature is determined according to the probability density model by:

determining a first probability density threshold value of the first training data set, a second probability density threshold value of the second training data set and a third probability density threshold value of the third training data set according to the probability density distribution curve,

wherein the test data set of the at least one feature is acquired by: simultaneously acquiring a first test data set of the first feature, a second test data set of the second feature and a third test data set of the third feature,

wherein the probability density distribution curve of the test data set of the at least one feature is acquired according to the built probability density model by:

respectively acquiring a first probability density distribution curve of the first test data set, a second probability density distribution curve of the second test data set and a third probability density distribution curve of the third test data set according to the built probability density model,

wherein the Wasserstein distance between the probability density distribution curve of the training data set of the at least one feature and the probability density distribution curve of the test data set of the at least one feature is calculated, and the Wasserstein distance is mapped into a centesimal system, to determine a probability density distribution measurement total score by:

calculating (S2601) a Wasserstein distance between the first probability density distribution curve of the first training data set and the first probability density distribution curve of the first test data set, and mapping the Wasserstein distance into a centesimal system, to determine a first probability density distribution measurement score;

calculating (S2602) a Wasserstein distance between the second probability density distribution curve of the second training data set and the second probability density distribution curve of the second test data set, and mapping the Wasserstein distance into a centesimal system, to determine a second probability density distribution measurement score; and

calculating (S2603) a Wasserstein distance between the third probability density distribution curve of the third training data set and the third probability density distribution curve of the third test data set, and mapping the Wasserstein distance into a centesimal system, to determine a third probability density distribution measurement score,

wherein the Wasserstein distance between the probability density distribution curve of the training data set of the at least one feature and the probability density distribution curve of the test data set of the at least one feature is calculated, and the Wasserstein distance is mapped into a centesimal system, to determine a probability density distribution measurement total score by:

determining (S2604) the probability density distribution measurement total score according to the first probability density distribution measurement score, the second probability density distribution measurement score and the third probability density distribution measurement score by:

$$sm = wm1 \times smc1 + wm2 \times smc2 + wm3 \times smc3,$$

where sm is the probability density distribution measurement total score, smc1 is the first probability density distribution measurement score, smc2 is the second probability density distribution measurement score, smc3 is the third probability density distribution measurement score, and wm1, wm2 and wm3 are weight coefficients of the first probability density distribution measurement score, the second probability density distribution measurement score, and the third probability density distribution measurement score,

wherein the proportion of a number of probability density values less than a probability density threshold value among the plurality of probability density values of the test data set of the at least one feature to a total number of the plurality of probability density values of the test data set of the at least one feature is calculated, and the proportion is mapped into a centesimal system, to determine an abnormal value ratio measurement total score by:

calculating (S2701) a proportion of a number of probability density values less than the first probability density threshold value among the plurality of probability density values of the first test data set to a total number of the plurality of probability density values of the first test data set, and mapping the proportion into a centesimal system, to determine a first abnormal value ratio measurement score;

calculating (S2702) a proportion of a number of probability density values less than the second probability density threshold value among the plurality of probability density values of the second test data set to a total number of the plurality of probability density values of the second test data set, and mapping the proportion into a centesimal system, to determine a second abnormal value ratio measurement score; and

calculating (S2703) a proportion of a number of probability density values less than the third probability density threshold value among the plurality of probability density values of the third test data set to a total number of the plurality of probability density values of the third test data set, and mapping the proportion into a centesimal system, to determine a third abnormal value ratio measurement score,

wherein the proportion of a number of probability density values less than a probability density threshold value among the plurality of probability density values of the test data set of the at least one feature to a total number of the plurality of probability density values of the test data set of the at least one feature is calculated, and the proportion is mapped into a centesimal system, to determine an abnormal value ratio measurement total score by:

determining (S2704) the abnormal value ratio measurement total score according to the first abnormal value ratio measurement score, the second abnormal value ratio measurement score and the third abnormal value ratio measurement score by:

$$st = wt1 \times stc1 + wt2 \times stc2 + wt3 \times stc3,$$

where st is the abnormal value ratio measurement total score, stc1 is the first abnormal value ratio measurement score, stc2 is the second abnormal value ratio measurement score, stc3 is the third abnormal value ratio measurement score, and wt1, wt2 and wt3 are weight coefficients of the first abnormal value ratio measurement score, the second abnormal value ratio measurement score, and the third abnormal value ratio measurement score,

wherein the first probability density threshold value of the first training data set is determined by: ranking a plurality of probability density values of the first training data set of the first feature in an order of small to large; and taking the probability density value ranked at $N1^{th}$ as the first probability density threshold value, wherein N1 = int(10% $\times$ N10), N10 is a total number of the plurality of probability density values of the first training data set, and int represents a rounding operation; and/or,

the second probability density threshold value of the second training data set is determined by: ranking a plurality of probability density values of the second training data set of the second feature in an order of small to large; and taking the probability density value ranked at $N2^{th}$ as the second probability density threshold value, wherein N2 = int(10% $\times$ N20), N20 is a total number of the plurality of probability density values of the second training data set, and int represents a rounding operation; and/or,

the third probability density threshold value of the third training data set is determined by: ranking a plurality of probability density values of the third training data set of the third feature in an order of small to large; and taking the probability density value ranked at $N3^{th}$ as the third probability density threshold value, wherein N3 = int(10% $\times$ N30), N30 is a total number of the plurality of probability density values of the third training data set, and int represents a rounding operation.

6. An electronic device, comprising:

   one or more processors; and
   a storage apparatus configured to store one or more programs,
   wherein the one or more programs, when executed by the one or more processors, are configured to cause the one or more processors to implement the method according to any one of claims 1 to 4.

7. A computer-readable storage medium having executable instructions thereon, wherein the instructions, when executed by a processor, are configured to cause the processor to implement the method according to any one of claims 1 to 4.

8. A computer program product comprising a computer program, wherein the computer program, when executed by a processor, is configured to cause the processor to implement the method according to any one of claims 1 to 4.

**Patentansprüche**

1. Ein Verfahren zum Erkennen eines Laufzustands einer virtuellen Maschine basierend auf einer Kerndichteschätzung, umfassend:

Erfassen (S210) eines Trainingsdatensatzes von mindestens einem Merkmal, wobei das mindestens eine Merkmal dazu eingerichtet ist, mindestens einen Laufzustand der virtuellen Maschine zu charakterisieren;

Erstellen (S220) eines Wahrscheinlichkeitsdichtemodells für den Trainingsdatensatz des mindestens einen Merkmals durch Verwenden eines Kerndichteschätzungsalgorithmus, um eine Wahrscheinlichkeitsdichteverteilungskurve des Trainingsdatensatzes des mindestens einen Merkmals zu erhalten;

Bestimmen (S230) eines Wahrscheinlichkeitsdichteschwellenwertes des Trainingsdatensatzes des mindestens einen Merkmals gemäß dem Wahrscheinlichkeitsdichtemodell;

Erfassen (S240) eines Testdatensatzes des mindestens einen Merkmals;

Erfassen (S250) einer Wahrscheinlichkeitsdichteverteilungskurve des Testdatensatzes des mindestens einen Merkmals gemäß dem erstellten Wahrscheinlichkeitsdichtemodell;

Berechnen (S260) einer Wasserstein-Distanz zwischen der Wahrscheinlichkeitsdichteverteilungskurve des Trainingsdatensatzes des mindestens einen Merkmals und der Wahrscheinlichkeitsdichteverteilungskurve des Testdatensatzes des mindestens einen Merkmals und Abbilden der Wasserstein-Distanz in ein Hundertstel-System, um eine Gesamtnote der Wahrscheinlichkeitsdichteverteilungsmessung zu bestimmen;

Berechnen (S270) eines Anteils einer Anzahl von Wahrscheinlichkeitsdichtewerten, die kleiner sind als ein Wahrscheinlichkeitsdichteschwellenwert, unter einer Vielzahl von Wahrscheinlichkeitsdichtewerten des Testdatensatzes des mindestens einen Merkmals zu einer Gesamtanzahl der Vielzahl von Wahrscheinlichkeitsdichtewerten des Testdatensatzes des mindestens einen Merkmals, und Abbilden des Anteils in ein Hundertstel-System, um eine Gesamtnote der Ausreißerwert-Verhältnismessung zu bestimmen;

Bestimmen (S280) einer Gesamtnote des Zustands der virtuellen Maschine gemäß der Gesamtnote der Wahrscheinlichkeitsdichteverteilungsmessung und der Gesamtnote der Ausreißerwert-Verhältnismessung; und

Bestimmen (S290) des Laufzustands der virtuellen Maschine gemäß der Gesamtnote des Zustands der virtuellen Maschine,

wobei das Bestimmen einer Gesamtnote des Zustands der virtuellen Maschine gemäß der Gesamtnote der Wahrscheinlichkeitsdichteverteilungsmessung und der Gesamtnote der Ausreißerwert-Verhältnismessung umfasst:

Bestimmen der Gesamtnote des Zustands der virtuellen Maschine gemäß der Gesamtnote der Wahrscheinlichkeitsdichteverteilungsmessung und der Gesamtnote der Ausreißerwert-Verhältnismessung durch:

$$ss = ws1 \times sm + ws2 \times st,$$

wobei ss die Gesamtnote des Zustands der virtuellen Maschine ist, sm die Gesamtnote der Wahrscheinlichkeitsdichteverteilungsmessung ist, st die Gesamtnote der Ausreißerwert-Verhältnismessung ist, ws1 ein Gewichtungskoeffizient der Gesamtnote der Wahrscheinlichkeitsdichteverteilungsmessung ist und ws2 ein Gewichtungskoeffizient der Gesamtnote der Ausreißerwert-Verhältnismessung ist,
wobei

$$ws1 > ws2,$$

wobei das mindestens eine Merkmal ein erstes Merkmal, ein zweites Merkmal und ein drittes Merkmal umfasst, und das erste Merkmal, das zweite Merkmal und das dritte Merkmal dazu eingerichtet sind, unterschiedliche Laufzustände der virtuellen Maschine jeweils zu charakterisieren; und

das Erfassen eines Trainingsdatensatzes des mindestens einen Merkmals umfasst: gleichzeitiges Erfassen eines ersten Trainingsdatensatzes des ersten Merkmals, eines zweiten Trainingsdatensatzes des zweiten Merkmals und eines dritten Trainingsdatensatzes des dritten Merkmals,

wobei das Erstellen eines Wahrscheinlichkeitsdichtemodells für den Trainingsdatensatz des mindestens einen Merkmals durch Verwenden eines Kerndichteschätzungsalgorithmus, um eine Wahrscheinlichkeitsdichteverteilungskurve des Trainingsdatensatzes des mindestens einen Merkmals zu erhalten, umfasst:

Erstellen von Wahrscheinlichkeitsdichtemodellen jeweils für den ersten Trainingsdatensatz des ersten Merkmals, den zweiten Trainingsdatensatz des zweiten Merkmals und den dritten Trainingsdatensatz des dritten Merkmals durch Verwenden des Kerndichteschätzungsalgorithmus, um eine erste Wahrscheinlichkeitsdichteverteilungskurve des ersten Trainingsdatensatzes, eine zweite Wahrscheinlichkeitsdichteverteilungskurve des zweiten Trainingsdatensatzes und eine dritte Wahrscheinlichkeitsdichteverteilungskurve des dritten Trainingsdatensatzes zu erhalten,
wobei das Bestimmen eines Wahrscheinlichkeitsdichteschwellenwertes des Trainingsdatensatzes des mindestens einen Merkmals gemäß dem Wahrscheinlichkeitsdichtemodell umfasst:

Bestimmen eines ersten Wahrscheinlichkeitsdichteschwellenwertes des ersten Trainingsdatensatzes, eines zweiten Wahrscheinlichkeitsdichteschwellenwertes des zweiten Trainingsdatensatzes und eines dritten Wahrscheinlichkeitsdichteschwellenwertes des dritten Trainingsdatensatzes gemäß der Wahrscheinlichkeitsdichteverteilungskurve,
wobei das Erfassen eines Testdatensatzes des mindestens einen Merkmals umfasst: gleichzeitiges Erfassen eines ersten Testdatensatzes des ersten Merkmals, eines zweiten Testdatensatzes des zweiten Merkmals und eines dritten Testdatensatzes des dritten Merkmals,
wobei das Erfassen einer Wahrscheinlichkeitsdichteverteilungskurve des Testdatensatzes des mindestens einen Merkmals gemäß dem erstellten Wahrscheinlichkeitsdichtemodell umfasst:

jeweiliges Erfassen einer ersten Wahrscheinlichkeitsdichteverteilungskurve des ersten Testdatensatzes, einer zweiten Wahrscheinlichkeitsdichteverteilungskurve des zweiten Testdatensatzes und einer dritten Wahrscheinlichkeitsdichteverteilungskurve des dritten Testdatensatzes gemäß dem erstellten Wahrscheinlichkeitsdichtemodell,
wobei das Berechnen (S260) einer Wasserstein-Distanz zwischen der Wahrscheinlichkeitsdichteverteilungskurve des Trainingsdatensatzes des mindestens einen Merkmals und der Wahrscheinlichkeitsdichteverteilungskurve des Testdatensatzes des mindestens einen Merkmals und das Abbilden der Wasserstein-Distanz in ein Hundertstel-System, um eine Gesamtnote der Wahrscheinlichkeitsdichteverteilungsmessung zu bestimmen, umfasst:
Berechnen (S2601) einer Wasserstein-Distanz zwischen der ersten Wahrscheinlichkeitsdichteverteilungskurve des ersten Trainingsdatensatzes und der ersten Wahrscheinlichkeitsdichteverteilungskurve des ersten Testdatensatzes und Abbilden der Wasserstein-Distanz in ein Hundertstel-System, um eine erste Note der Wahrscheinlichkeitsdichteverteilungsmessung zu bestimmen;
Berechnen (S2602) einer Wasserstein-Distanz zwischen der zweiten Wahrscheinlichkeitsdichteverteilungskurve des zweiten Trainingsdatensatzes und der zweiten Wahrscheinlichkeitsdichteverteilungskurve des zweiten Testdatensatzes und Abbilden der Wasserstein-Distanz in ein Hundertstel-System, um eine zweite Note der Wahrscheinlichkeitsdichteverteilungsmessung zu bestimmen; und
Berechnen (S2603) einer Wasserstein-Distanz zwischen der dritten Wahrscheinlichkeitsdichteverteilungskurve des dritten Trainingsdatensatzes und der dritten Wahrscheinlichkeitsdichteverteilungskurve des dritten Testdatensatzes und Abbilden der Wasserstein-Distanz in ein Hundertstel-System, um eine dritte Note der Wahrscheinlichkeitsdichteverteilungsmessung zu bestimmen,
wobei das Berechnen (S260) einer Wasserstein-Distanz zwischen der Wahrscheinlichkeitsdichteverteilungskurve des Trainingsdatensatzes des mindestens einen Merkmals und der Wahrscheinlichkeitsdichteverteilungskurve des Testdatensatzes des mindestens einen Merkmals und das Abbilden der Wasserstein-Distanz in ein Hundertstel-System, um eine Gesamtnote der Wahrscheinlichkeitsdichteverteilungsmessung zu bestimmen, umfasst:
Bestimmen (S2604) der Gesamtnote der Wahrscheinlichkeitsdichteverteilungsmessung gemäß der ersten Note der Wahrscheinlichkeitsdichteverteilungsmessung, der zweiten Note der Wahrscheinlichkeitsdichteverteilungsmessung und der dritten Note der Wahrscheinlichkeitsdichteverteilungsmessung durch:

$$sm = wm1 \times smc1 + wm2 \times smc2 + wm3 \times smc3,$$

wobei sm die Gesamtnote der Wahrscheinlichkeitsdichteverteilungsmessung ist, smc1 die erste Note der Wahrscheinlichkeitsdichteverteilungsmessung ist, smc2 die zweite Note der Wahrscheinlichkeitsdichteverteilungsmessung ist, smc3 die dritte Note der Wahrscheinlichkeitsdichteverteilungsmessung ist und wm1, wm2 und wm3 Gewichtungskoeffizienten der ersten, zweiten bzw. dritten Note der Wahrscheinlichkeitsdichteverteilungsmessung sind,
wobei das Berechnen (S270) eines Anteils einer Anzahl von Wahrscheinlichkeitsdichtewerten, die kleiner sind als ein Wahrscheinlichkeitsdichteschwellenwert, unter der Vielzahl von Wahrscheinlichkeitsdichtewerten des Testdatensatzes des mindestens einen Merkmals zu einer Gesamtanzahl der Vielzahl von Wahrscheinlichkeitsdichtewerten des Testdatensatzes des mindestens einen Merkmals, und das Abbilden des Anteils in ein Hundertstel-System, um eine Gesamtnote der Ausreißerwert-Verhältnismessung zu bestimmen, umfasst:

Berechnen (S2701) eines Anteils einer Anzahl von Wahrscheinlichkeitsdichtewerten, die kleiner sind als der erste Wahrscheinlichkeitsdichteschwellenwert, unter der Vielzahl von Wahrscheinlichkeitsdichtewerten des ersten Testdatensatzes zu einer Gesamtanzahl der Vielzahl von Wahrscheinlichkeitsdichtewerten des ersten Testdatensatzes und Abbilden des Anteils in ein Hundertstel-System, um eine erste Note der Ausreißerwert-Verhältnismessung zu bestimmen;

Berechnen (S2702) eines Anteils einer Anzahl von Wahrscheinlichkeitsdichtewerten, die kleiner sind als der zweite Wahrscheinlichkeitsdichteschwellenwert, unter der Vielzahl von Wahrscheinlichkeitsdichtewerten des zweiten Testdatensatzes zu einer Gesamtanzahl der Vielzahl von Wahrscheinlichkeitsdichtewerten des zweiten Testdatensatzes und Abbilden des Anteils in ein Hundertstel-System, um eine zweite Note der Ausreißerwert-Verhältnismessung zu bestimmen; und

Berechnen (S2703) eines Anteils einer Anzahl von Wahrscheinlichkeitsdichtewerten, die kleiner sind als der dritte Wahrscheinlichkeitsdichteschwellenwert, unter der Vielzahl von Wahrscheinlichkeitsdichtewerten des dritten Testdatensatzes zu einer Gesamtanzahl der Vielzahl von Wahrscheinlichkeitsdichtewerten des dritten Testdatensatzes und Abbilden des Anteils in ein Hundertstel-System, um eine dritte Note der Ausreißerwert-Verhältnismessung zu bestimmen,

wobei das Berechnen (S270) eines Anteils einer Anzahl von Wahrscheinlichkeitsdichtewerten, die kleiner sind als ein Wahrscheinlichkeitsdichteschwellenwert, unter der Vielzahl von Wahrscheinlichkeitsdichtewerten des Testdatensatzes des mindestens einen Merkmals zu einer Gesamtanzahl der Vielzahl von Wahrscheinlichkeitsdichtewerten des Testdatensatzes des mindestens einen Merkmals, und das Abbilden des Anteils in ein Hundertstel-System, um eine Gesamtnote der Ausreißerwert-Verhältnismessung zu bestimmen, umfasst:

Bestimmen (S2704) der Gesamtnote der Ausreißerwert-Verhältnismessung gemäß der ersten, zweiten und dritten Note der Ausreißerwert-Verhältnismessung durch:

$$st = wt1 \times stc1 + wt2 \times stc2 + wt3 \times stc3,$$

wobei st die Gesamtnote der Ausreißerwert-Verhältnismessung ist, stc1 die erste Note der Ausreißerwert-Verhältnismessung ist, stc2 die zweite Note der Ausreißerwert-Verhältnismessung ist, stc3 die dritte Note der Ausreißerwert-Verhältnismessung ist und wt1, wt2 und wt3 Gewichtungskoeffizienten der ersten, zweiten bzw. dritten Note der Ausreißerwert-Verhältnismessung sind,

wobei das Bestimmen eines ersten Wahrscheinlichkeitsdichteschwellenwertes des ersten Trainingsdatensatzes umfasst: Ordnen einer Vielzahl von Wahrscheinlichkeitsdichtewerten des ersten Trainingsdatensatzes des ersten Merkmals in einer Reihenfolge von klein nach groß; und Nehmen des Wahrscheinlichkeitsdichtewerts, der an der Position N1 rangiert, als ersten Wahrscheinlichkeitsdichteschwellenwert, wobei N1= int(10% × N10), N10 eine Gesamtanzahl der Vielzahl von Wahrscheinlichkeitsdichtewerten des ersten Trainingsdatensatzes ist und int eine Rundungsoperation darstellt; und/oder,

das Bestimmen eines zweiten Wahrscheinlichkeitsdichteschwellenwertes des zweiten Trainingsdatensatzes umfasst: Ordnen einer Vielzahl von Wahrscheinlichkeitsdichtewerten des zweiten Trainingsdatensatzes des zweiten Merkmals in einer Reihenfolge von klein nach groß; und Nehmen des Wahrscheinlichkeitsdichtewerts, der an der Position N2 rangiert, als zweiten Wahrscheinlichkeitsdichteschwellenwert, wobei N2= int(10% × N20), N20 eine Gesamtanzahl der Vielzahl von Wahrscheinlichkeitsdichtewerten des zweiten Trainingsdatensatzes ist und int eine Rundungsoperation darstellt; und/oder,

das Bestimmen eines dritten Wahrscheinlichkeitsdichteschwellenwertes des dritten Trainingsdatensatzes umfasst: Ordnen einer Vielzahl von Wahrscheinlichkeitsdichtewerten des dritten Trainingsdatensatzes des dritten Merkmals in einer Reihenfolge von klein nach groß; und Nehmen des Wahrscheinlichkeitsdichtewerts, der an der Position N3 rangiert, als dritten Wahrscheinlichkeitsdichteschwellenwert, wobei N3= int(10% × N30), N30 eine Gesamtanzahl der Vielzahl von Wahrscheinlichkeitsdichtewerten des dritten Trainingsdatensatzes ist und int eine Rundungsoperation darstellt.

2. Das Verfahren nach Anspruch 1, wobei das Bestimmen des Laufzustands der virtuellen Maschine gemäß der Gesamtnote des Zustands der virtuellen Maschine umfasst:

Bestimmen, dass die virtuelle Maschine sich in einem abnormalen Laufzustand befindet, als Reaktion auf die Gesamtnote des Zustands der virtuellen Maschine, die kleiner ist als ein erster Bewertungs-schwellenwert;
Bestimmen, dass die virtuelle Maschine sich in einem Hochpotenzial-Abnormalzustand befindet, als Reaktion auf die Gesamtnote des Zustands der virtuellen Maschine, die in einem ersten Intervall definiert durch den ersten Bewertungsschwellenwert und einen zweiten Bewertungsschwellenwert liegt; und
Bestimmen, dass die virtuelle Maschine sich in einem Niedrigpotenzial-Abnormalzustand befindet, als Reaktion auf die Gesamtnote des Zustands der virtuellen Maschine, die in einem zweiten Intervall definiert durch den zweiten Bewertungsschwellenwert und einen dritten Bewertungsschwellenwert liegt,
wobei das Bestimmen des Laufzustands der virtuellen Maschine gemäß der Gesamtnote des Zustands der virtuellen Maschine umfasst:

Bestimmen, dass die virtuelle Maschine sich in einem guten Laufzustand befindet, als Reaktion auf die Gesamtnote des Zustands der virtuellen Maschine, die in einem dritten Intervall definiert durch den dritten Bewertungsschwellenwert und einen vierten Bewertungsschwellenwert liegt; und
Bestimmen, dass die virtuelle Maschine sich in einem exzellenten Laufzustand befindet, als Reaktion auf die Gesamtnote des Zustands der virtuellen Maschine, die größer ist als der vierte Bewertungsschwellenwert.

3. Das Verfahren nach Anspruch 1, wobei das erste Merkmal eine CPU-Auslastung ist, das zweite Merkmal ein Netzwerk-Empfangsverkehr ist und das dritte Merkmal ein Netzwerk-Sendeverkehr ist,
wobei mindestens eines von dem Erfassen eines Trainingsdatensatzes des mindestens einen Merkmals und dem Erfassen eines Testdatensatzes des mindestens einen Merkmals umfasst:

Sammeln (S310) von Primärüberwachungsdaten der virtuellen Maschine innerhalb einer spezifizierten Zeitperiode, wobei die Primärüberwachungsdaten eine virtuelle Maschinennummer, einen Erfassungszeitstempel, CPU-Nutzungszeit der virtuellen Maschine, einen Netzwerk-Empfangsverkehr und einen Netzwerk-Sendeverkehr umfassen;
Aggregieren (S320) der gesammelten Primärüberwachungsdaten gemäß der virtuellen Maschinennummer;
Extrahieren (S330) von Daten einer Vielzahl von Merkmalen innerhalb einer vorbestimmten Zeitperiode aus den aggregierten Primärüberwachungsdaten; und
Fusionieren (S340) der Daten der Vielzahl von Merkmalen gemäß dem Erfassungszeitstempel, um einen Merkmalsvektor zu bilden.

4. Das Verfahren nach Anspruch 1, wobei das Verfahren ferner umfasst:

Durchführen einer Korrelationsanalyse an dem ersten Trainingsdatensatz des ersten Merkmals, dem zweiten Trainingsdatensatz des zweiten Merkmals und dem dritten Trainingsdatensatz des dritten Merkmals; und
Bestimmen von Gewichtungskoeffizienten wm1, wm2 und wm3 und Gewichtungskoeffizienten wt1, wt2 und wt3 gemäß einem Ergebnis der Korrelationsanalyse,
wobei eine Korrelation zwischen dem zweiten Trainingsdatensatz des zweiten Merkmals und dem dritten Trainingsdatensatz des dritten Merkmals größer ist als eine Korrelation zwischen dem ersten Trainingsdatensatz des ersten Merkmals und dem zweiten Trainingsdatensatz des zweiten Merkmals, und die Korrelation zwischen dem zweiten Trainingsdatensatz des zweiten Merkmals und dem dritten Trainingsdatensatz des dritten Merkmals größer ist als eine Korrelation zwischen dem ersten Trainingsdatensatz des ersten Merkmals und dem dritten Trainingsdatensatz des dritten Merkmals; und
der Gewichtungskoeffizient wm1 größer ist als jeder der Gewichtungskoeffizienten wm2 und wm3, und der Gewichtungskoeffizient wt1 größer ist als jeder der Gewichtungskoeffizienten wt2 und wt3, wobei der Gewichtungskoeffizient wm2 größer ist als der Gewichtungskoeffizient wm3 und der Gewichtungskoeffizient wt2 größer ist als der Gewichtungskoeffizient wt3.

5. Eine Vorrichtung zum Erkennen eines Laufzustands einer virtuellen Maschine basierend auf einer Kerndichteschätzung, umfassend:

ein Trainingsdatenerfassungsmodul, das dazu eingerichtet ist, einen Trainingsdatensatz von mindestens einem Merkmal zu erfassen, wobei das mindestens eine Merkmal dazu eingerichtet ist, mindestens einen Laufzustand der virtuellen Maschine zu charakterisieren;

ein erstes Wahrscheinlichkeitsdichtemodell-Erstellungsmodul, das dazu eingerichtet ist, ein Wahrscheinlichkeitsdichtemodell für den Trainingsdatensatz des mindestens einen Merkmals durch Verwenden eines Kerndichteschätzungsalgorithmus zu erstellen, um eine Wahrscheinlichkeitsdichteverteilungskurve des Trainingsdatensatzes des mindestens einen Merkmals zu erhalten;

ein Wahrscheinlichkeitsdichteschwellenwert-Bestimmungsmodul, das dazu eingerichtet ist, einen Wahrscheinlichkeitsdichteschwellenwert des Trainingsdatensatzes des mindestens einen Merkmals gemäß dem Wahrscheinlichkeitsdichtemodell zu bestimmen;

ein Testdatensatzerfassungsmodul, das dazu eingerichtet ist, einen Testdatensatz des mindestens einen Merkmals zu erfassen;

ein zweites Wahrscheinlichkeitsdichteverteilungskurven-Erfassungsmodul, das dazu eingerichtet ist, eine Wahrscheinlichkeitsdichteverteilungskurve des Testdatensatzes des mindestens einen Merkmals gemäß dem erstellten Wahrscheinlichkeitsdichtemodell zu erfassen;

ein Gesamtnoten-Bestimmungsmodul der Wahrscheinlichkeitsdichteverteilungsmessung, das dazu eingerichtet ist, (S260) eine Wasserstein-Distanz zwischen der Wahrscheinlichkeitsdichteverteilungskurve des Trainingsdatensatzes des mindestens einen Merkmals und der Wahrscheinlichkeitsdichteverteilungskurve des Testdatensatzes des mindestens einen Merkmals zu berechnen und die Wasserstein-Distanz in ein Hundertstel-System abzubilden, um eine Gesamtnote der Wahrscheinlichkeitsdichteverteilungsmessung zu bestimmen;

ein Gesamtnoten-Bestimmungsmodul der Ausreißerwert-Verhältnismessung, das dazu eingerichtet ist, (S270) einen Anteil einer Anzahl von Wahrscheinlichkeitsdichtewerten, die kleiner sind als ein Wahrscheinlichkeitsdichteschwellenwert, unter der Vielzahl von Wahrscheinlichkeitsdichtewerten des Testdatensatzes des mindestens einen Merkmals zu einer Gesamtanzahl der Vielzahl von Wahrscheinlichkeitsdichtewerten des Testdatensatzes des mindestens einen Merkmals zu berechnen und den Anteil in ein Hundertstel-System abzubilden, um eine Gesamtnote der Ausreißerwert-Verhältnismessung zu bestimmen;

ein Gesamtnoten-Bestimmungsmodul des Zustands der virtuellen Maschine, das dazu eingerichtet ist, eine Gesamtnote des Zustands der virtuellen Maschine gemäß der Gesamtnote der Wahrscheinlichkeitsdichteverteilungsmessung und der Gesamtnote der Ausreißerwert-Verhältnismessung zu bestimmen; und

ein Laufzustands-Bestimmungsmodul der virtuellen Maschine, das dazu eingerichtet ist, den Laufzustand der virtuellen Maschine gemäß der Gesamtnote des Zustands der virtuellen Maschine zu bestimmen,

wobei die Gesamtnote des Zustands der virtuellen Maschine gemäß der Gesamtnote der Wahrscheinlichkeitsdichteverteilungsmessung und der Gesamtnote der Ausreißerwert-Verhältnismessung bestimmt wird durch:

Bestimmen der Gesamtnote des Zustands der virtuellen Maschine gemäß der Gesamtnote der Wahrscheinlichkeitsdichteverteilungsmessung und der Gesamtnote der Ausreißerwert-Verhältnismessung durch:

$$ss = ws1 \times sm + ws2 \times st,$$

wobei ss die Gesamtnote des Zustands der virtuellen Maschine ist, sm die Gesamtnote der Wahrscheinlichkeitsdichteverteilungsmessung ist, st die Gesamtnote der Ausreißerwert-Verhältnismessung ist, ws1 ein Gewichtungskoeffizient der Gesamtnote der Wahrscheinlichkeitsdichteverteilungsmessung ist und ws2 ein Gewichtungskoeffizient der Gesamtnote der Ausreißerwert-Verhältnismessung ist, wobei ws1>ws2,

wobei das mindestens eine Merkmal ein erstes Merkmal, ein zweites Merkmal und ein drittes Merkmal umfasst, und das erste Merkmal, das zweite Merkmal und das dritte Merkmal dazu eingerichtet sind, unterschiedliche Laufzustände der virtuellen Maschine jeweils zu charakterisieren; und

wobei der Trainingsdatensatz des mindestens einen Merkmals erfasst wird durch: gleichzeitiges Erfassen eines ersten Trainingsdatensatzes des ersten Merkmals, eines zweiten Trainingsdatensatzes des zweiten Merkmals und eines dritten Trainingsdatensatzes des dritten Merkmals,

wobei das Wahrscheinlichkeitsdichtemodell für den Trainingsdatensatz des mindestens einen Merkmals durch Verwenden eines Kerndichteschätzungsalgorithmus erstellt wird, um eine Wahrscheinlichkeitsdichteverteilungskurve des Trainingsdatensatzes des mindestens einen Merkmals zu erhalten, umfassend:

Erstellen von Wahrscheinlichkeitsdichtemodellen jeweils für den ersten Trainingsdatensatz des ersten Merkmals, den zweiten Trainingsdatensatz des zweiten Merkmals und den dritten Trainingsdatensatz des dritten Merkmals durch Verwenden des Kerndichteschätzungsalgorithmus, um eine erste Wahrscheinlichkeitsdichteverteilungskurve des ersten Trainingsdatensatzes, eine zweite Wahrscheinlichkeitsdichteverteilungskurve des zweiten Trainingsdatensatzes und eine dritte Wahrscheinlichkeitsdichteverteilungskurve des dritten Trainingsdatensatzes zu erhalten,

wobei der Wahrscheinlichkeitsdichteschwellenwert des Trainingsdatensatzes des mindestens einen Merkmals gemäß dem Wahrscheinlichkeitsdichtemodell bestimmt wird durch:

Bestimmen eines ersten Wahrscheinlichkeitsdichteschwellenwertes des ersten Trainingsdatensatzes, eines zweiten Wahrscheinlichkeitsdichteschwellenwertes des zweiten Trainingsdatensatzes und eines dritten Wahrscheinlichkeitsdichteschwellenwertes des dritten Trainingsdatensatzes gemäß der Wahrscheinlichkeitsdichteverteilungskurve,

wobei der Testdatensatz des mindestens einen Merkmals erfasst wird durch: gleichzeitiges Erfassen eines ersten Testdatensatzes des ersten Merkmals, eines zweiten Testdatensatzes des zweiten Merkmals und eines dritten Testdatensatzes des dritten Merkmals,

wobei die Wahrscheinlichkeitsdichteverteilungskurve des Testdatensatzes des mindestens einen Merkmals gemäß dem erstellten Wahrscheinlichkeitsdichtemodell erfasst wird durch:

jeweiliges Erfassen einer ersten Wahrscheinlichkeitsdichteverteilungskurve des ersten Testdatensatzes, einer zweiten Wahrscheinlichkeitsdichteverteilungskurve des zweiten Testdatensatzes und einer dritten Wahrscheinlichkeitsdichteverteilungskurve des dritten Testdatensatzes gemäß dem erstellten Wahrscheinlichkeitsdichtemodell,

wobei die Wasserstein-Distanz zwischen der Wahrscheinlichkeitsdichteverteilungskurve des Trainingsdatensatzes des mindestens einen Merkmals und der Wahrscheinlichkeitsdichteverteilungskurve des Testdatensatzes des mindestens einen Merkmals berechnet wird, und die Wasserstein-Distanz in ein Hundertstel-System abgebildet wird, um eine Gesamtnote der Wahrscheinlichkeitsdichteverteilungsmessung zu bestimmen durch:

Berechnen (S2601) einer Wasserstein-Distanz zwischen der ersten Wahrscheinlichkeitsdichteverteilungskurve des ersten Trainingsdatensatzes und der ersten Wahrscheinlichkeitsdichteverteilungskurve des ersten Testdatensatzes und Abbilden der Wasserstein-Distanz in ein Hundertstel-System, um eine erste Note der Wahrscheinlichkeitsdichteverteilungsmessung zu bestimmen;

Berechnen (S2602) einer Wasserstein-Distanz zwischen der zweiten Wahrscheinlichkeitsdichteverteilungskurve des zweiten Trainingsdatensatzes und der zweiten Wahrscheinlichkeitsdichteverteilungskurve des zweiten Testdatensatzes und Abbilden der Wasserstein-Distanz in ein Hundertstel-System, um eine zweite Note der Wahrscheinlichkeitsdichteverteilungsmessung zu bestimmen; und

Berechnen (S2603) einer Wasserstein-Distanz zwischen der dritten Wahrscheinlichkeitsdichteverteilungskurve des dritten Trainingsdatensatzes und der dritten Wahrscheinlichkeitsdichteverteilungskurve des dritten Testdatensatzes und Abbilden der Wasserstein-Distanz in ein Hundertstel-System, um eine dritte Note der Wahrscheinlichkeitsdichteverteilungsmessung zu bestimmen,

wobei die Wasserstein-Distanz zwischen der Wahrscheinlichkeitsdichteverteilungskurve des Trainingsdatensatzes des mindestens einen Merkmals und der Wahrscheinlichkeitsdichteverteilungskurve des Testdatensatzes des mindestens einen Merkmals berechnet wird, und die Wasserstein-Distanz in ein Hundertstel-System abgebildet wird, um eine Gesamtnote der Wahrscheinlichkeitsdichteverteilungsmessung zu bestimmen durch:

Bestimmen (S2604) der Gesamtnote der Wahrscheinlichkeitsdichteverteilungsmessung gemäß der ersten, zweiten und dritten Note der Wahrscheinlichkeitsdichteverteilungsmessung durch:

$$sm = wm1 \times smc1 + wm2 \times smc2 + wm3 \times smc3,$$

wobei sm die Gesamtnote der Wahrscheinlichkeitsdichteverteilungsmessung ist, smc1 die erste Note der Wahrscheinlichkeitsdichteverteilungsmessung ist, smc2 die zweite Note der Wahrscheinlichkeitsdichteverteilungsmessung ist, smc3 die dritte Note der Wahrscheinlichkeitsdichteverteilungsmessung ist und wm1, wm2 und wm3 Gewichtungskoeffizienten der ersten, zweiten bzw. dritten Note der Wahrscheinlichkeitsdichteverteilungsmessung sind,

wobei der Anteil einer Anzahl von Wahrscheinlichkeitsdichtewerten, die kleiner sind als ein Wahrscheinlichkeitsdichteschwellenwert, unter der Vielzahl von Wahrscheinlichkeitsdichtewerten des Testdatensatzes des mindestens einen Merkmals zu einer Gesamtanzahl der Vielzahl von Wahrscheinlichkeitsdichtewerten des Testdatensatzes des mindestens einen Merkmals berechnet wird, und der Anteil in ein Hundertstel-System abgebildet wird, um eine Gesamtnote der Ausreißerwert-Verhältnismessung zu bestimmen durch:

Berechnen (S2701) eines Anteils einer Anzahl von Wahrscheinlichkeitsdichtewerten, die kleiner sind als der erste Wahrscheinlichkeitsdichteschwellenwert, unter der Vielzahl von Wahrscheinlichkeitsdichtewerten des ersten Testdatensatzes zu einer Gesamtanzahl der Vielzahl von Wahrscheinlichkeitsdichtewerten des ersten Testdatensatzes und Abbilden des Anteils in ein Hundertstel-System, um eine erste Note der Ausreißerwert-Verhältnismessung zu bestimmen;

Berechnen (S2702) eines Anteils einer Anzahl von Wahrscheinlichkeitsdichtewerten, die kleiner sind als der zweite Wahrscheinlichkeitsdichteschwellenwert, unter der Vielzahl von Wahrscheinlichkeitsdichtewerten des zweiten Testdatensatzes zu einer Gesamtanzahl der Vielzahl von Wahrscheinlichkeitsdichtewerten des zweiten Testdatensatzes und Abbilden des Anteils in ein Hundertstel-System, um eine zweite Note der Ausreißerwert-Verhältnismessung zu bestimmen; und

Berechnen (S2703) eines Anteils einer Anzahl von Wahrscheinlichkeitsdichtewerten, die kleiner sind als der dritte Wahrscheinlichkeitsdichteschwellenwert, unter der Vielzahl von Wahrscheinlichkeitsdichtewerten des dritten Testdatensatzes zu einer Gesamtanzahl der Vielzahl von Wahrscheinlichkeitsdichtewerten des dritten Testdatensatzes und Abbilden des Anteils in ein Hundertstel-System, um eine dritte Note der Ausreißerwert-Verhältnismessung zu bestimmen,

wobei der Anteil einer Anzahl von Wahrscheinlichkeitsdichtewerten, die kleiner sind als ein Wahrscheinlichkeitsdichteschwellenwert, unter der Vielzahl von Wahrscheinlichkeitsdichtewerten des Testdatensatzes des mindestens einen Merkmals zu einer Gesamtanzahl der Vielzahl von Wahrscheinlichkeitsdichtewerten des Testdatensatzes des mindestens einen Merkmals berechnet wird, und der Anteil in ein Hundertstel-System abgebildet wird, um eine Gesamtnote der Ausreißerwert-Verhältnismessung zu bestimmen durch:

Bestimmen (S2704) der Gesamtnote der Ausreißerwert-Verhältnismessung gemäß der ersten, zweiten und dritten Note der Ausreißerwert-Verhältnismessung durch:

$$st = wt1 \times stc1 + wt2 \times stc2 + wt3 \times stc3,$$

wobei st die Gesamtnote der Ausreißerwert-Verhältnismessung ist, stc1 die erste Note der Ausreißerwert-Verhältnismessung ist, stc2 die zweite Note der Ausreißerwert-Verhältnismessung ist, stc3 die dritte Note der Ausreißerwert-Verhältnismessung ist und wt1, wt2 und wt3 Gewichtungskoeffizienten der ersten, zweiten bzw. dritten Note der Ausreißerwert-Verhältnismessung sind,

wobei der erste Wahrscheinlichkeitsdichteschwellenwert des ersten Trainingsdatensatzes bestimmt wird durch: Ordnen einer Vielzahl von Wahrscheinlichkeitsdichtewerten des ersten Trainingsdatensatzes des ersten Merkmals in einer Reihenfolge von klein nach groß; und Nehmen des Wahrscheinlichkeitsdichtewerts, der an der Position N1 rangiert, als ersten Wahrscheinlichkeitsdichteschwellenwert, wobei N1= int(10% × N10), N10 eine Gesamtanzahl der Vielzahl von Wahrscheinlichkeitsdichtewerten des ersten Trainingsdatensatzes ist und int eine Rundungsoperation darstellt; und/oder,

der zweite Wahrscheinlichkeitsdichteschwellenwert des zweiten Trainingsdatensatzes wird bestimmt durch: Ordnen einer Vielzahl von Wahrscheinlichkeitsdichtewerten des zweiten Trainingsdatensatzes des zweiten Merkmals in einer Reihenfolge von klein nach groß; und Nehmen des Wahrscheinlichkeitsdichtewerts, der an der Position N2 rangiert, als zweiten Wahrscheinlichkeitsdichteschwellenwert, wobei N2= int(10% × N20), N20 eine Gesamtanzahl der Vielzahl von Wahrscheinlichkeitsdichtewerten des zweiten Trainingsdatensatzes ist und int eine Rundungsoperation darstellt; und/oder,

der dritte Wahrscheinlichkeitsdichteschwellenwert des dritten Trainingsdatensatzes wird bestimmt durch: Ordnen einer Vielzahl von Wahrscheinlichkeitsdichtewerten des dritten Trainingsdatensatzes des dritten Merkmals in einer Reihenfolge von klein nach groß; und Nehmen des Wahrscheinlichkeitsdichtewerts, der an der Position N3 rangiert, als dritten Wahrscheinlichkeitsdichteschwellenwert, wobei N3= int(10% × N30), N30 eine Gesamtanzahl der Vielzahl von Wahrscheinlichkeitsdichtewerten des dritten Trainingsdatensatzes ist und int eine Rundungsoperation darstellt.

6. Ein elektronisches Gerät, umfassend:

einen oder mehrere Prozessoren; und
eine Speichervorrichtung, die dazu eingerichtet ist, ein oder mehrere Programme zu speichern,
wobei das eine oder die mehreren Programme, wenn sie durch den einen oder die mehreren Prozessoren ausgeführt werden, dazu eingerichtet sind, den einen oder die mehreren Prozessoren zu veranlassen, das Verfahren nach einem der Ansprüche 1 bis 4 zu implementieren.

7. Ein computerlesbares Speichermedium, das ausführbare Anweisungen darauf aufweist, wobei die Anweisungen, wenn sie durch einen Prozessor ausgeführt werden, dazu eingerichtet sind, den Prozessor zu veranlassen, das Verfahren nach einem der Ansprüche 1 bis 4 zu implementieren.

8. Ein Computerprogrammprodukt, umfassend ein Computerprogramm, wobei das Computerprogramm, wenn es durch einen Prozessor ausgeführt wird, dazu eingerichtet ist, den Prozessor zu veranlassen, das Verfahren nach einem der Ansprüche 1 bis 4 zu implementieren.

**Revendications**

1. Procédé de détection d'un état de fonctionnement d'une machine virtuelle basé sur une estimation de la densité du noyau, comprenant:

l'acquisition (S210) d'un ensemble de données d'apprentissage d'au moins une caractéristique, dans lequel l'au moins une caractéristique est configurée pour caractériser au moins un état de fonctionnement de la machine virtuelle;
la construction (S220) d'un modèle de densité de probabilité pour l'ensemble des données d'apprentissage de l'au moins une caractéristique à l'aide d'un algorithme d'estimation de la densité du noyau, afin d'obtenir une courbe de distribution de la densité de probabilité de l'ensemble des données d'apprentissage de l'au moins une caractéristique;
la détermination (S230) d'une valeur seuil de densité de probabilité de l'ensemble des données d'apprentissage de l'au moins une caractéristique en fonction du modèle de densité de probabilité;
l'acquisition (S240) d'un ensemble de données d'essai de l'au moins une caractéristique;
l'acquisition (S250) d'une courbe de distribution de la densité de probabilité de l'ensemble des données d'essai de l'au moins une caractéristique selon le modèle de densité de probabilité construit;
le calcul (S260) d'une distance de Wasserstein entre la courbe de distribution de la densité de probabilité de l'ensemble des données d'apprentissage de l'au moins une caractéristique et la courbe de distribution de la densité de probabilité de l'ensemble des données d'essai de l'au moins une caractéristique, et la conversion de la distance de Wasserstein en un système centésimal, afin de déterminer un score total de mesure de la distribution de la densité de probabilité;

le calcul (S270) d'une proportion d'un nombre de valeurs de densité de probabilité inférieur à une valeur seuil de densité de probabilité parmi la pluralité de valeurs de densité de probabilité de l'ensemble des données d'essai de l'au moins une caractéristique par rapport à un nombre total de la pluralité de valeurs de densité de probabilité de l'ensemble de données d'essai de l'au moins une caractéristique, et la conversion de la proportion en un système centésimal, afin de déterminer un score total de mesure de rapport de valeur anormale;

la détermination (S280) d'un score total de l'état de la machine virtuelle en fonction du score total de la mesure de la distribution de la densité de probabilité et du score total de la mesure du rapport des valeurs anormales; et

la détermination (S290) de l'état de fonctionnement de la machine virtuelle en fonction du score total de l'état de la machine virtuelle,

dans lequel la détermination d'un score total d'état de machine virtuelle en fonction du score total de mesure de la distribution de la densité de probabilité et du score total de mesure du rapport des valeurs anormales consiste à:

déterminer le score total de l'état de la machine virtuelle en fonction du score total de mesure de la distribution de la densité de probabilité et du score total de mesure du rapport des valeurs anormales par:

$$ss \ = \ ws1 \times sm \ + ws2 \times st,$$

où ss est le score totale de l'état de la machine virtuelle, sm est le score total de mesure de la distribution de la densité de probabilité, st est le score total de mesure du rapport des valeurs anormales, ws1 est un coefficient de pondération du score total de la mesure de la distribution de la densité de probabilité, et ws2 est un coefficient de pondération du score total de la mesure du rapport des valeurs anormales,

dans lequel

$$ws1 > ws2,$$

dans lequel l'au moins une caractéristique comprend une première caractéristique, une deuxième caractéristique et une troisième caractéristique, et la première caractéristique, la deuxième caractéristique et la troisième caractéristique sont configurées pour caractériser respectivement différents états de fonctionnement de la machine virtuelle; et

l'acquisition d'un ensemble de données d'apprentissage d'au moins une caractéristique consiste à: acquérir simultanément un premier ensemble de données d'apprentissage de la première caractéristique, un deuxième ensemble de données d'apprentissage de la deuxième caractéristique et un troisième ensemble de données d'apprentissage de la troisième caractéristique,

dans lequel la construction d'un modèle de densité de probabilité pour l'ensemble des données d'apprentissage de l'au moins une caractéristique à l'aide d'un algorithme d'estimation de la densité du noyau, afin d'obtenir une courbe de distribution de la densité de probabilité de l'ensemble des données d'apprentissage de l'au moins une caractéristique consiste à:

construire des modèles de densité de probabilité respectivement pour le premier ensemble des données d'apprentissage de la première caractéristique, le deuxième ensemble des données d'apprentissage de la deuxième caractéristique et le troisième ensemble des données d'apprentissage de la troisième caractéristique à l'aide de l'algorithme d'estimation de la densité du noyau, de manière à obtenir une première courbe de distribution de la densité de probabilité du premier ensemble des données d'apprentissage, une deuxième courbe de distribution de la densité de probabilité du deuxième ensemble des données d'apprentissage et une troisième courbe de distribution de la densité de probabilité du troisième ensemble des données d'apprentissage,

dans lequel la détermination d'une valeur seuil de densité de probabilité de l'ensemble des données d'apprentissage de l'au moins une caractéristique en fonction du modèle de densité de probabilité consiste à:

déterminer une première valeur seuil de densité de probabilité du premier ensemble de données d'apprentissage, une deuxième valeur seuil de densité de probabilité du deuxième ensemble de données d'apprentissage et une troisième valeur seuil de densité de probabilité du troisième ensemble de données d'apprentissage en fonction de la courbe de distribution de la densité de probabilité,

dans lequel l'acquisition d'un ensemble de données d'essai de l'au moins une caractéristique consiste à: acquérir simultanément un premier ensemble de données d'essai de la première caractéristique, un deuxième ensemble de données d'essai de la deuxième caractéristique et un troisième ensemble de données d'essai de la troisième caractéristique,

dans lequel l'acquisition d'une courbe de distribution de la densité de probabilité de l'ensemble des données d'essai de l'au moins une caractéristique selon le modèle de densité de probabilité construit consiste à:

acquérir respectivement une première courbe de distribution de la densité de probabilité du premier ensemble de données d'essai, une deuxième courbe de distribution de la densité de probabilité du deuxième ensemble de données d'essai et une troisième courbe de distribution de la densité de probabilité du troisième ensemble de données d'essai selon le modèle de densité de probabilité construit,

dans lequel le calcul (S260) d'une distance de Wasserstein entre la courbe de distribution de la densité de probabilité de l'ensemble des données d'apprentissage de l'au moins une caractéristique et la courbe de distribution de la densité de probabilité de l'ensemble des données d'essai de l'au moins une caractéristique, et la conversion de la distance de Wasserstein en un système centésimal, afin de déterminer un score total de mesure de la distribution de la densité de probabilité consiste à:

calculer (S2601) une distance de Wasserstein entre la première courbe de distribution de la densité de probabilité du premier ensemble des données d'apprentissage et la première courbe de distribution de la densité de probabilité du premier ensemble des données d'essai, et la conversion de la distance de Wasserstein en un système centésimal, afin de déterminer un premier score total de mesure de la distribution de la densité de probabilité;

calculer (S2602) une distance de Wasserstein entre la deuxième courbe de distribution de la densité de probabilité du deuxième ensemble des données d'apprentissage et la deuxième courbe de distribution de la densité de probabilité du deuxième ensemble des données d'essai, et la conversion de la distance de Wasserstein en un système centésimal, afin de déterminer un deuxième score total de mesure de la distribution de la densité de probabilité; et

calculer (S2603) une distance de Wasserstein entre la troisième courbe de distribution de la densité de probabilité du troisième ensemble des données d'apprentissage et la troisième courbe de distribution de la densité de probabilité de l'ensemble des données d'essai, et la conversion de la distance de Wasserstein en un système centésimal, afin de déterminer un troisième score total de mesure de la distribution de la densité de probabilité,

dans lequel le calcul (S260) d'une distance de Wasserstein entre la courbe de distribution de la densité de probabilité de l'ensemble des données d'apprentissage de l'au moins une caractéristique et la courbe de distribution de la densité de probabilité de l'ensemble des données d'essai de l'au moins une caractéristique, et la conversion de la distance de Wasserstein en un système centésimal, afin de déterminer un score total de mesure de la distribution de la densité de probabilité consiste à:

déterminer (S2604) le score total de mesure de la distribution de la densité de probabilité en fonction du premier score de la mesure de la distribution de la densité de probabilité, du deuxième score de mesure de la distribution de la densité de probabilité et du troisième score de mesure de la distribution de la densité de probabilité par:

$$sm = wm1 \times smc1 + wm2 \times smc2 + wm3 \times smc3,$$

où sm est le score total de mesure de la distribution de la densité de probabilité, smc1 est le premier score de mesure de la distribution de la densité de probabilité, smc2 est le deuxième score de mesure de la distribution de la densité de probabilité, smc3 est le troisième score de mesure de la distribution de la densité de probabilité, et wm1, wm2 et wm3 sont les coefficients de pondération du premier score de mesure de la distribution de la densité de probabilité, du deuxième score de mesure de la distribution de la densité de probabilité, et du troisième score de mesure de la distribution de la densité de probabilité,

dans lequel le calcul (S270) d'une proportion d'un nombre de valeurs de densité de probabilité inférieur à une valeur seuil de densité de probabilité parmi la pluralité de valeurs de densité de probabilité de l'ensemble des données d'essai de l'au moins une caractéristique par rapport à un nombre total de la pluralité de valeurs de densité de probabilité de l'ensemble de données d'essai de l'au moins une caractéristique, et la conversion de la proportion en un système centésimal, afin de déterminer un score total de mesure de rapport de valeur anormale consiste à:

calculer (S2701) une proportion d'un nombre de valeurs de densité de probabilité inférieur à la première valeur seuil de densité de probabilité parmi la pluralité de valeurs de densité de probabilité d premier ensemble des données d'essai par rapport à un nombre total de la pluralité de valeurs de densité de probabilité du premier ensemble des données d'essai, et la conversion de la proportion en un système centésimal, afin de déterminer un premier score de mesure de rapport de valeur anormale;

calculer (S2702) une proportion d'un nombre de valeurs de densité de probabilité inférieur à la deuxième valeur seuil de densité de probabilité parmi la pluralité de valeurs de densité de probabilité du deuxième ensemble des données d'essai par rapport à un nombre total de la pluralité de valeurs de densité de probabilité du deuxième ensemble de données d'essai, et la conversion de la proportion en un système centésimal, afin de déterminer un deuxième score total de mesure de rapport de valeur anormale; et

calculer (S2703) une proportion d'un nombre de valeurs de densité de probabilité inférieur à la troisième valeur seuil de densité de probabilité parmi la pluralité de valeurs de densité de probabilité du troisième ensemble des données d'essai par rapport à un nombre total de la pluralité de valeurs de densité de probabilité du troisième ensemble de données d'essai, et la conversion de la proportion en un système centésimal, afin de déterminer un troisième score total de mesure de rapport de valeur anormale,

dans lequel le calcul (S270) d'une proportion d'un nombre de valeurs de densité de probabilité inférieur à une valeur seuil de densité de probabilité parmi la pluralité de valeurs de densité de probabilité de l'ensemble des données d'essai de l'au moins une caractéristique par rapport à un nombre total de la pluralité de valeurs de densité de probabilité de l'ensemble de données d'essai de l'au moins une caractéristique, et la mise en correspondance de la proportion dans un système centésimal, afin de déterminer un score total de mesure de rapport de valeur anormale consiste à:

déterminer (S2704) le score total de mesure de rapport des valeurs anormales en fonction du premier score de mesure du rapport des valeurs anormales, du deuxième score de mesure de rapport des valeurs anormales et du troisième score de mesure de rapport des valeurs anormales par:

$$st \ = \ wt1 \times stc1 \ + wt2 \times stc2 \ + wt3 \times stc3,$$

où st est le score total de mesure du rapport de valeurs anormales, stc1 est le score de mesure du rapport des premières valeurs anormales, stc2 est le score de mesure du rapport des deuxièmes valeurs anormales, stc3 est le score de mesure du rapport des troisièmes valeurs anormales, et wt1, wt2 et wt3 sont les coefficients de pondération du premier score de mesure du rapport de valeurs anormales, du score de mesure du rapport des deuxièmes valeurs anormales, et du score de mesure du rapport des troisièmes valeurs anormales,

dans lequel la détermination d'une première valeur seuil de densité de probabilité du premier ensemble de données d'apprentissage comprend:

le classement dans l'ordre croissant d'une pluralité de valeurs de densité de probabilité du premier ensemble de données d'apprentissage de la première caractéristique; et la prise de la valeur de densité de probabilité classée au N1$^e$ rang comme première valeur seuil de densité de probabilité, dans laquelle N1 = int(10% $\times$ N10), N10 est un nombre total de la pluralité de valeurs de densité de probabilité du premier ensemble de données d'apprentissage, et int représente une opération d'arrondi; et/ou,

la détermination d'une deuxième valeur seuil de densité de probabilité du deuxième ensemble de données d'apprentissage comprend: le classement dans l'ordre croissant d'une pluralité de valeurs de densité de probabilité du deuxième ensemble de données d'apprentissage de la deuxième caractéristique; et la prise de la valeur de densité de probabilité classée à N2$^e$ comme deuxième valeur seuil de densité de probabilité, dans laquelle N2 = int(10% $\times$ N20), N20 est un nombre total de la pluralité de valeurs de densité de probabilité du deuxième ensemble de données d'apprentissage, et int représente une opération d'arrondi; et/ou,

la détermination d'une troisième valeur seuil de densité de probabilité du troisième ensemble de données d'apprentissage comprend: le classement dans l'ordre croissant d'une pluralité de valeurs de densité de probabilité du troisième ensemble de données d'apprentissage de la troisième caractéristique; et la prise de la valeur de densité de probabilité classée à N3$^e$ comme troisième valeur seuil de densité de probabilité, dans laquelle N3 = int(10% $\times$ N30), N30 est un nombre total de la pluralité de valeurs de densité de probabilité du troisième ensemble de données d'apprentissage, et int représente une opération d'arrondi.

2. Procédé selon la revendication 1, dans lequel la détermination de l'état de fonctionnement de la machine virtuelle en fonction du score total de l'état de la machine virtuelle consiste à:

déterminer que la machine virtuelle se trouve dans un état de fonctionnement anormal, le score total de l'état de la machine virtuelle étant inférieur à une première valeur seuil;
déterminer que la machine virtuelle est dans un état anormal à haut potentiel si le score total de l'état de la machine virtuelle se situe dans un premier intervalle défini par la première valeur seuil de score et la seconde valeur seuil de score; et
déterminer que la machine virtuelle est dans un état anormal à faible potentiel si le score total de l'état de la machine virtuelle se situe dans un deuxième intervalle défini par la deuxième valeur seuil de score et la troisième valeur seuil de score,
dans lequel la détermination de l'état de fonctionnement de la machine virtuelle en fonction du score total de l'état de la machine virtuelle consiste à:

déterminer que la machine virtuelle est dans un bon état de fonctionnement si le score total de l'état de la machine virtuelle se situe dans un troisième intervalle défini par la troisième valeur seuil de score et une quatrième valeur seuil de score; et
déterminer que la machine virtuelle est dans un état de fonctionnement excellent si le score total de l'état de la machine virtuelle est supérieur à la quatrième valeur seuil de score.

3. Procédé selon la revendication 1, dans lequel la première caractéristique est une utilisation UC, la deuxième caractéristique est un réseau recevant du trafic et la troisième caractéristique est un réseau envoyant du trafic, dans lequel au moins l'une des deux étapes suivantes, à savoir l'acquisition d'un ensemble de données d'apprentissage d'au moins une caractéristique et l'acquisition d'un ensemble de données d'essai de l'au moins une caractéristique, consiste à:

collecter (S310) des données de surveillance primaires de la machine virtuelle au cours d'une période spécifiée, les données de surveillance primaires comprenant un numéro de machine virtuelle, une estampille temporelle de collecte, le temps d'utilisation UC de la machine virtuelle, un réseau recevant du trafic et un réseau envoyant du trafic;
agréger (S320) les données de surveillance primaires collectées en fonction du numéro de la machine virtuelle;
extraire (S330) des données d'une pluralité de caractéristiques dans une période de temps prédéterminée des données de surveillance primaires agrégées; et

fusionner (S340) les données de la pluralité de caractéristiques en fonction de l'estampille temporelle de la collecte pour former un vecteur de caractéristiques.

4.  Procédé selon la revendication 1, le procédé comprenant en outre:

la réalisation d'une analyse de corrélation sur le premier ensemble de données d'apprentissage de la première caractéristique, le deuxième ensemble de données d'apprentissage de la deuxième caractéristique et le troisième ensemble de données d'apprentissage de la troisième caractéristique; et
la détermination des coefficients de pondération wm1, wm2 et wm3 et des coefficients de pondération wt1, wt2 et wt3 en fonction d'un résultat de l'analyse de corrélation,
dans lequel la corrélation entre le deuxième ensemble de données d'apprentissage de la deuxième caractéristique et le troisième ensemble de données d'apprentissage de la troisième caractéristique est supérieure à la corrélation entre le premier ensemble de données d'apprentissage de la première caractéristique et le deuxième ensemble de données d'apprentissage de la deuxième caractéristique, et la corrélation entre le deuxième ensemble de données d'apprentissage de la deuxième caractéristique et le troisième ensemble de données d'apprentissage de la troisième caractéristique est supérieure à la corrélation entre le premier ensemble de données d'apprentissage de la première caractéristique et le troisième ensemble de données d'apprentissage de la troisième caractéristique; et
le coefficient de pondération wm1 est supérieur à l'un quelconque des coefficients de pondération wm2 et wm3, et le coefficient de pondération wt1 est supérieur à l'un quelconque des coefficients de pondération wt2 et wt3, dans lequel le coefficient de pondération wm2 est supérieur au coefficient de pondération wm3, et le coefficient de pondération wt2 est supérieur au coefficient de pondération wt3.

5.  Appareil de détection d'un état de fonctionnement d'une machine virtuelle basé sur une estimation de la densité du noyau, comprenant:

un module d'acquisition de données d'apprentissage configuré pour acquérir un ensemble de données d'apprentissage d'au moins une caractéristique, dans lequel l'au moins une caractéristique est configurée pour caractériser au moins un état de fonctionnement de la machine virtuelle;
un premier module de construction de modèle de densité de probabilité configuré pour construire un modèle de densité de probabilité pour l'ensemble des données d'apprentissage de l'au moins une caractéristique à l'aide d'un algorithme d'estimation de la densité du noyau, afin d'obtenir une courbe de distribution de la densité de probabilité de l'ensemble des données d'apprentissage de l'au moins une caractéristique;
un module de détermination de valeur seuil de densité de probabilité configuré pour déterminer une valeur seuil de densité de probabilité de l'ensemble des données d'apprentissage de l'au moins une caractéristique en fonction du modèle de densité de probabilité;
un module d'acquisition d'ensemble de données d'essai configuré pour acquérir un ensemble de données d'essai de l'au moins une caractéristique;
un deuxième module d'acquisition de courbe de distribution de la densité de probabilité configuré pour acquérir une courbe de distribution de densité de probabilité de l'ensemble des données d'essai de l'au moins une caractéristique selon le modèle de densité de probabilité construit;
un module de détermination de score total de mesure de distribution de densité de probabilité configuré pour calculer (S260) une distance de Wasserstein entre la courbe de distribution de la densité de probabilité de l'ensemble des données d'apprentissage de l'au moins une caractéristique et la courbe de distribution de la densité de probabilité de l'ensemble des données d'essai de l'au moins une caractéristique, et convertir la distance de Wasserstein en un système centésimal, afin de déterminer un score total de mesure de la distribution de la densité de probabilité;
un module de détermination de score total de mesure de rapport de valeur anormale configuré pour calculer (S270) une proportion d'un nombre de valeurs de densité de probabilité inférieur à une valeur seuil de densité de probabilité parmi la pluralité de valeurs de densité de probabilité de l'ensemble des données d'essai de l'au moins une caractéristique par rapport à un nombre total de la pluralité de valeurs de densité de probabilité de l'ensemble de données d'essai de l'au moins une caractéristique, et convertir la proportion en un système centésimal, afin de déterminer un score total de mesure de rapport de valeur anormale;
un module de détermination de score total d'état de la machine virtuelle configuré pour déterminer un score total de l'état de la machine virtuelle en fonction du score total de mesure de la distribution de la densité de probabilité et du score total de mesure du rapport des valeurs anormales; et
un module de détermination d'état de fonctionnement de la machine virtuelle configuré pour déterminer l'état de fonctionnement de la machine virtuelle en fonction du score total de l'état de la machine virtuelle,

dans lequel le score total de l'état de la machine virtuelle est déterminé en fonction du score total de mesure de la distribution de la densité de probabilité et du score total de mesure du rapport des valeurs anormales par:

détermination du score total de l'état de la machine virtuelle en fonction du score total de mesure de la distribution de la densité de probabilité et du score total de mesure du rapport des valeurs anormales par:

$$ss = ws1 \times sm + ws2 \times st,$$

où ss est le score totale de l'état de la machine virtuelle, sm est le score total de mesure de la distribution de la densité de probabilité, st est le score total de mesure du rapport des valeurs anormales, ws1 est un coefficient de pondération du score total de la mesure de la distribution de la densité de probabilité, et ws2 est un coefficient de pondération du score total de la mesure du rapport des valeurs anormales, dans lequel

$$ws1 > ws2,$$

dans lequel l'au moins une caractéristique comprend une première caractéristique, une deuxième caractéristique et une troisième caractéristique, et la première caractéristique, la deuxième caractéristique et la troisième caractéristique sont configurées pour caractériser respectivement différents états de fonctionnement de la machine virtuelle; et
dans lequel l'ensemble de données d'apprentissage d'au moins une caractéristique est acquis par: acquisition simultanée d'un premier ensemble de données d'apprentissage de la première caractéristique, d'un deuxième ensemble de données d'apprentissage de la deuxième caractéristique et d'un troisième ensemble de données d'apprentissage de la troisième caractéristique,
dans lequel le modèle de densité de probabilité est construit pour l'ensemble des données d'apprentissage de l'au moins une caractéristique à l'aide d'un algorithme d'estimation de la densité du noyau, afin d'obtenir une courbe de distribution de la densité de probabilité de l'ensemble des données d'apprentissage de l'au moins une caractéristique par:

construction des modèles de densité de probabilité respectivement pour le premier ensemble des données d'apprentissage de la première caractéristique, le deuxième ensemble des données d'apprentissage de la deuxième caractéristique et le troisième ensemble des données d'apprentissage de la troisième caractéristique à l'aide de l'algorithme d'estimation de la densité du noyau, de manière à obtenir une première courbe de distribution de la densité de probabilité du premier ensemble des données d'apprentissage, une deuxième courbe de distribution de la densité de probabilité du deuxième ensemble des données d'apprentissage et une troisième courbe de distribution de la densité de probabilité du troisième ensemble des données d'apprentissage,
dans lequel la valeur seuil de densité de probabilité de l'ensemble des données d'apprentissage de l'au moins une caractéristique est déterminée en fonction du modèle de densité de probabilité par:

détermination d'une première valeur seuil de densité de probabilité du premier ensemble de données d'apprentissage, d'une deuxième valeur seuil de densité de probabilité du deuxième ensemble de données d'apprentissage et d'une troisième valeur seuil de densité de probabilité du troisième ensemble de données d'apprentissage en fonction de la courbe de distribution de la densité de probabilité,
dans lequel l'ensemble de données d'essai de l'au moins une caractéristique est acquis par: acquisition simultanée d'un premier ensemble de données d'essai de la première caractéristique, d'un deuxième ensemble de données d'essai de la deuxième caractéristique et d'un troisième ensemble de données d'essai de la troisième caractéristique,
dans lequel la courbe de distribution de la densité de probabilité de l'ensemble des données d'essai de l'au moins une caractéristique est acquise selon le modèle de densité de probabilité construit par:

acquisition respective d'une première courbe de distribution de la densité de probabilité du premier ensemble de données d'essai, d'une deuxième courbe de distribution de la densité de probabilité du deuxième ensemble de données d'essai et d'une troisième courbe de distribution de la densité de probabilité du troisième ensemble de données d'essai selon le modèle de densité de probabilité construit,

dans lequel la distance de Wasserstein entre la courbe de distribution de la densité de probabilité de l'ensemble des données d'apprentissage de l'au moins une caractéristique et la courbe de distribution de la densité de probabilité de l'ensemble des données d'essai de l'au moins une caractéristique est calculée, et la distance de Wasserstein est convertie en un système centésimal, afin de déterminer un score total de mesure de la distribution de la densité de probabilité;

calcul (S2601) d'une distance de Wasserstein entre la première courbe de distribution de la densité de probabilité du premier ensemble des données d'apprentissage et la première courbe de distribution de la densité de probabilité du premier ensemble des données d'essai, et conversion de la distance de Wasserstein en un système centésimal, afin de déterminer un premier score total de mesure de la distribution de la densité de probabilité;

calcul (S2602) d'une distance de Wasserstein entre la deuxième courbe de distribution de la densité de probabilité du deuxième ensemble des données d'apprentissage et la deuxième courbe de distribution de la densité de probabilité du deuxième ensemble des données d'essai, et conversion de la distance de Wasserstein en un système centésimal, afin de déterminer un deuxième score total de mesure de la distribution de la densité de probabilité; et

calcul (S2603) d'une distance de Wasserstein entre la troisième courbe de distribution de la densité de probabilité du troisième ensemble des données d'apprentissage et la troisième courbe de distribution de la densité de probabilité de l'ensemble des données d'essai, et conversion de la distance de Wasserstein en un système centésimal, afin de déterminer un troisième score total de mesure de la distribution de la densité de probabilité,

dans lequel la distance de Wasserstein entre la courbe de distribution de la densité de probabilité de l'ensemble des données d'apprentissage de l'au moins une caractéristique et la courbe de distribution de la densité de probabilité de l'ensemble des données d'essai de l'au moins une caractéristique est calculée, et la distance de Wasserstein est convertie en un système centésimal, afin de déterminer un score total de mesure de la distribution de la densité de probabilité par:

détermination (S2604) du score total de mesure de la distribution de la densité de probabilité en fonction du premier score de la mesure de la distribution de la densité de probabilité, du deuxième score de mesure de la distribution de la densité de probabilité et du troisième score de mesure de la distribution de la densité de probabilité par:

$$sm \; = \; wm1 \times smc1 \; + wm2 \times smc2 \; + wm3 \times smc3,$$

où sm est le score total de mesure de la distribution de la densité de probabilité, smc1 est le premier score de mesure de la distribution de la densité de probabilité, smc2 est le deuxième score de mesure de la distribution de la densité de probabilité, smc3 est le troisième score de mesure de la distribution de la densité de probabilité, et wm1, wm2 et wm3 sont les coefficients de pondération du premier score de mesure de la distribution de la densité de probabilité, du deuxième score de mesure de la distribution de la densité de probabilité, et du troisième score de mesure de la distribution de la densité de probabilité, dans lequel la proportion d'un nombre de valeurs de densité de probabilité inférieur à une valeur seuil de densité de probabilité parmi la pluralité de valeurs de densité de probabilité de l'ensemble des données d'essai de l'au moins une caractéristique par rapport à un nombre total de la pluralité de valeurs de densité de probabilité de l'ensemble de données d'essai de l'au moins une caractéristique est calculée, et la proportion est convertie en un système centésimal, afin de déterminer un score total de mesure de rapport de valeur anormale par;

calcul (S2701) d'une proportion d'un nombre de valeurs de densité de probabilité inférieur à la première valeur seuil de densité de probabilité parmi la pluralité de valeurs de densité de probabilité d premier ensemble des données d'essai par rapport à un nombre total de la pluralité de valeurs de densité de probabilité du premier ensemble des données d'essai, et conversion de la proportion en un système centésimal, afin de déterminer un premier score de mesure de rapport de valeur anormale;

calcul (S2702) d'une proportion d'un nombre de valeurs de densité de probabilité inférieur à la deuxième valeur seuil de densité de probabilité parmi la pluralité de valeurs de densité de probabilité du deuxième ensemble des données d'essai par rapport à un nombre total de la pluralité de valeurs de densité de probabilité du deuxième ensemble de données d'essai, et conversion de la proportion en un système centésimal, afin de déterminer un deuxième score total de mesure de rapport de valeur anormale ; et

calcul (S2703) d'une proportion d'un nombre de valeurs de densité de probabilité inférieur à la troisième valeur seuil de densité de probabilité parmi la pluralité de valeurs de densité de probabilité du troisième ensemble des données d'essai par rapport à un nombre total de la pluralité de valeurs de densité de probabilité du troisième ensemble de données d'essai, et conversion de la proportion en un système centésimal, afin de déterminer un troisième score total de mesure de rapport de valeur anormale,

dans lequel la proportion d'un nombre de valeurs de densité de probabilité inférieur à une valeur seuil de densité de probabilité parmi la pluralité de valeurs de densité de probabilité de l'ensemble des données d'essai de l'au moins une caractéristique par rapport à un nombre total de la pluralité de valeurs de densité de probabilité de l'ensemble de données d'essai de l'au moins une caractéristique est calculée, et la proportion est convertie en un système centésimal, afin de déterminer un score total de mesure de rapport de valeur anormale par ;

détermination (S2704) du score total de mesure de rapport des valeurs anormales en fonction du premier score de mesure du rapport des valeurs anormales, du deuxième score de mesure de rapport des valeurs anormales et du troisième score de mesure de rapport des valeurs anormales par :

$$st = wt1 \times stc1 + wt2 \times stc2 + wt3 \times stc3,$$

où st est le score total de mesure du rapport de valeurs anormales, stc1 est le score de mesure du rapport des premières valeurs anormales, stc2 est le score de mesure du rapport des deuxièmes valeurs anormales, stc3 est le score de mesure du rapport des troisièmes valeurs anormales, et wt1, wt2 et wt3 sont les coefficients de pondération du premier score de mesure du rapport de valeurs anormales, du score de mesure du rapport des deuxièmes valeurs anormales, et du score de mesure du rapport des troisièmes valeurs anormales,

dans lequel la première valeur seuil de densité de probabilité du premier ensemble des données d'apprentissage est déterminée : par classement d'une pluralité de valeurs de densité de probabilité du premier ensemble des données d'apprentissage de la première caractéristique dans un ordre allant du plus petit au plus grand ; et en prenant la valeur de densité de probabilité classée au N1$^e$ rang comme première valeur seuil de densité de probabilité, dans lequel N1 = int(10% $\times$ N10), N10 est un nombre total de la pluralité des valeurs de densité de probabilité du premier ensemble de données d'apprentissage, et int représente une opération d'arrondi ; et/ou,

la deuxième valeur seuil de densité de probabilité du deuxième ensemble des données d'apprentissage est déterminée : par classement, dans l'ordre croissant, d'une pluralité de valeurs de densité de probabilité du deuxième ensemble des données d'apprentissage de la deuxième caractéristique ; et en prenant la valeur de densité de probabilité classée au N2$^e$ rang comme deuxième valeur seuil de densité de probabilité, dans lequel N2 = int(10% $\times$ N20), N20 est un nombre total de la pluralité des valeurs de densité de probabilité du deuxième ensemble de données d'apprentissage, et int représente une opération d'arrondi ; et/ou,

dans lequel la troisième valeur seuil de densité de probabilité du troisième ensemble des données d'apprentissage est déterminée : par classement, dans l'ordre croissant, d'une pluralité de valeurs de densité de probabilité du troisième ensemble des données d'apprentissage de la troisième caractéristique ; et en prenant la valeur de densité de probabilité classée au N3$^e$ rang comme troisième valeur seuil de densité de probabilité, dans lequel N3 = int(10% $\times$ N30), N30 est un nombre total de la pluralité des valeurs de densité de probabilité du troisième ensemble de données d'apprentissage, et int représente une opération d'arrondi.

6. Dispositif électronique, comprenant :

un ou plusieurs processeurs; et
un dispositif de stockage configuré pour stocker un ou plusieurs programmes,
dans lequel le ou les programmes, lorsqu'ils sont exécutés par le ou les processeurs, sont configurés pour amener le ou les processeurs à mettre en œuvre le procédé selon l'une quelconque des revendications 1 à 4.

7. Support d'enregistrement lisible par ordinateur sur lequel sont stockées des instructions exécutables, les instructions, lorsqu'elles sont exécutées par un processeur, étant configurées pour amener le procédé à mettre en œuvre le procédé selon l'une quelconque des revendications 1 à 4.

8. Produit-programme informatique comprenant un programme informatique, le programme informatique, lorsqu'il est exécuté par un processeur, est configuré pour amener le processeur à mettre en œuvre le procédé selon l'une quelconque des revendications 1 à 4.

FIG. 1

S210

A training data set of at least one feature is acquired, wherein the at least one feature is used to characterize at least one running state of the virtual machine

S220

A probability density model is built for the training data set of the at least one feature using a kernel density estimation algorithm, so as to obtain a probability density distribution curve of the training data set of the at least one feature

S230

A probability density threshold value of the training data set of the at least one feature is determined according to the probability density model

S240

A test data set of the at least one feature is acquired

S250

A probability density distribution curve of the test data set of the at least one feature is acquired according to the built probability density model

S260

The probability density distribution curve of the training data set of the at least one feature is compared with the probability density distribution curve of the test data set of the at least one feature to determine a probability density distribution measurement total score

S270

A plurality of probability density values of the test data set of the at least one feature are compared with the probability density threshold value to determine an abnormal value ratio measurement total score

S280

A virtual machine state total score is determined according to the probability density distribution measurement total score and the abnormal value ratio measurement total score

S290

The running state of the virtual machine is determined according to the virtual machine state total score

FIG. 2

S310

Primary monitoring data of the virtual machine within a specified time period is collected

S320

The collected primary monitoring data is aggregated according to the virtual machine number

S330

Data of a plurality of features within a predetermined time period is extracted from the aggregated primary monitoring data

S340

The data of the plurality of features is fused according to the collection timestamp to form a feature vector

FIG. 3

FIG. 4

FIG. 5A

FIG. 5B

FIG. 5C

S2601

The first probability density distribution curve of the first training data set is compared with the first probability density distribution curve of the first test data set to determine a first probability density distribution measurement score

S2602

The second probability density distribution curve of the second training data set is compared with the second probability density distribution curve of the second test data set to determine a second probability density distribution measurement score

S2603

The third probability density distribution curve of the third training data set is compared with the third probability density distribution curve of the third test data set to determine a third probability density distribution measurement score

S2604

The probability density distribution measurement total score is determined according to the first probability density distribution measurement score, the second probability density distribution measurement score and the third probability density distribution measurement score

FIG. 6

S2701

A plurality of probability density values of the first test data set are compared with the first probability density threshold value to determine a first abnormal value ratio measurement score

S2702

A plurality of probability density values of the second test data set are compared with the second probability density threshold value to determine a second abnormal value ratio measurement score

S2703

A plurality of probability density values of the third test data set are compared with the third probability density threshold value to determine a third abnormal value ratio measurement score

S2704

The abnormal value ratio measurement total score is determined according to the first abnormal value ratio measurement score, the second abnormal value ratio measurement score and the third abnormal value ratio measurement score

FIG. 7

```
┌──────────────────────────────────────────────────┐
│                                          ─── 810   │
│   ┌──────────────────────────────────┐            │
│   │   Training data acquisition module│            │
│   └──────────────────────────────────┘  ─── 820   │
│   ┌──────────────────────────────────┐            │
│   │  First probability density model  │            │
│   │           building module         │            │
│   └──────────────────────────────────┘  ─── 830   │
│   ┌──────────────────────────────────┐            │
│   │  Probability density threshold    │            │
│   │     value determination module    │            │
│   └──────────────────────────────────┘  ─── 840   │
│   ┌──────────────────────────────────┐            │
│   │   Test data set acquisition module│            │
│   └──────────────────────────────────┘  ─── 850   │
│   ┌──────────────────────────────────┐            │
│   │ Second probability density        │            │
│   │ distribution curve acquisition    │            │
│   │            module                 │            │
│   └──────────────────────────────────┘  ─── 860   │
│   ┌──────────────────────────────────┐            │
│   │  Probability density distribution │            │
│   │  measurement total score          │            │
│   │  determination module             │            │
│   └──────────────────────────────────┘  ─── 870   │
│   ┌──────────────────────────────────┐            │
│   │  Abnormal value ratio measurement │            │
│   │  total score determination module │            │
│   └──────────────────────────────────┘  ─── 880   │
│   ┌──────────────────────────────────┐            │
│   │  Virtual machine state total score│            │
│   │       determination module        │            │
│   └──────────────────────────────────┘  ─── 890   │
│   ┌──────────────────────────────────┐            │
│   │ Virtual machine running state     │            │
│   │     determination module          │            │
│   └──────────────────────────────────┘            │
│                                          ─── 800   │
└──────────────────────────────────────────────────┘
```

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ayer-constrained variational autoencoding kernel density estimation model for anomaly detection. **LV PENG et al.** KNOWLEDGE-BASED SYSTEMS. ELSEVIER, 10 March 2020, vol. 196

- **IBIDUNMOYE OLUMUYIWA et al.** *Blackbox Strategies for Detecting Service Performance Anomalies in Virtualized Environments*, 01 May 2016, 1-22